# EUROPÄISCHE PATENTSCHRIFT

(11) **EP 0 844 937 B1**
(45) Veröffentlichungstag und Bekanntmachung des Hinweises auf die Patenterteilung: **12.01.2000**
(21) Anmeldenummer: 96938918.8
(22) Anmeldetag: 31.08.1996
(51) Int. Cl.: B60K 6/04, B60L 11/02

(54) **ANTRIEBSSYSTEM FÜR EIN KRAFTFAHRZEUG, MIT EINEM ANTRIEBSAGGREGAT UND EINER ELEKTRISCHEN MASCHINE, UND VERFAHREN ZUM BETREIBEN DESSELBEN**
DRIVE SYSTEM FOR A MOTOR VEHICLE WITH A DRIVE UNIT AND ELECTRIC MACHINE, AND METHOD OF OPERATING THE SYSTEM
SYSTEME D'ENTRAINEMENT POUR AUTOMOBILE MUNI D'UN ORGANE D'ENTRAINEMENT ET D'UN MOTEUR ELECTRIQUE, ET MODE D'UTILISATION ASSOCIE

(30) Priorität: 31.08.1995 DE 19532136
(43) Veröffentlichungstag der Anmeldung: 03.06.1998
(73) Patentinhaber: Continental ISAD Electronic Systems GmbH & Co. KG, 86899 Landsberg (DE); GRÜNDL UND HOFFMANN GmbH GESELLSCHAFT FÜR ELEKTROTECHNISCHE ENTWICKLUNGEN, 82319 Starnberg (DE)
(72) Erfinder: MASBERG, Ullrich, D-51503 Rösrath (DE); PELS, Thomas, D-46359 Heiden (DE); ZEYEN, Klaus-Peter, D-50670 Köln (DE); GRÜNDL, Andreas, D-81377 München (DE); HOFFMANN, Bernhard, D-82319 Starnberg (DE)
(74) Vertreter: von Samson-Himmelstjerna, Friedrich R., Dipl.-Phys.
(86) Internationale Anmeldenummer: DE9601616
(87) Internationale Veröffentlichungsnummer: WO9708007

(56) Entgegenhaltungen:
- EP-A- 0 175 952
- EP-A- 0 354 790
- WO-A-88/08636
- WO-A-94/19856
- AU-A- 5 840 173
- DE-A- 2 823 225
- DE-A- 3 338 548
- DE-A- 4 202 083
- DE-A- 4 423 577
- DE-U- 29 502 906
- US-A- 2 790 917
- US-A- 5 053 632
- PATENT ABSTRACTS OF JAPAN Bd. 016, Nr. 187 (M-1244) 07 Mai 1992 & JP,A,04 024 156 (HINO MOTORS LTD) 28 Januar 1992

## Beschreibung

Die Erfindung betrifft ein Antriebssystem, insbesondere für ein Kraftfahrzeug.

Herkömmlicherweise verwendet man in Antriebssystemen von Kraftfahrzeugen reibschlüssige Kupplungen, welche ein Anfahren des Kraftfahrzeugs mit Drehmomentwandlung ("schleifende Kupplung") in der Anfahrphase ermöglichen. Ihre weitere Aufgabe besteht darin, einen Gangwechsel durch Trennen des Antriebsaggregats von einem Schaltgetriebe und anschließendes Wiederverbinden mit einer durch Reibung bewirkten Drehzahlanpassung von Antriebsaggregat und Getriebe zu erlauben. Ferner dienen sie als Überlastschutz und der Schwingungsdämpfung. Diese Reibkupplungen sind hochbeanspruchte Verschleißteile, die laufend überwacht und zum Teil nachgestellt werden müssen. Bei überdurchschnittlicher Beanspruchung, wie z.B. bei übermäßiger Benutzung im Stadtverkehr oder bei belastender Fahrweise erreichen sie zum Teil nicht die Fahrzeuglebensdauer und müssen vorher ersetzt werden. Die Bedienung einer Reibkupplung ist insbesondere für Fahranfänger kompliziert. Selbst geübten Fahrern gelingt nicht immer ein ruckfreies Anfahren und Schalten, was nicht nur eine Komforteinbuße, sondern auch eine besondere Belastung für das Antriebsaggregat und andere Teile des Antriebssystems darstellt. Ein (nicht immer wermeidbares) "Abwürgen" des Antriebsaggregats beim Anfahren stellt in Gefahrensituationen ein erhebliches Unfallrisiko dar.

Bekannt sind ferner hydrodynamische Kupplungen, zum Teil mit Wandlerfunktion. Diese erlauben im allgemeinen ein nahezu ruckfreies Anfahren und Schalten bei einfacher Bedienung. Sie sind jedoch im Aufbau recht aufwendig. Ihre Steuerbarkeit ist begrenzt; z.B. ist eine völlige Wellentrennung oft nicht erzielbar, so daß es im Leerlauf (in Fahrstellung/Stellung D) zur Schleichfahrt kommt. Zudem sind sie mit nicht unbeträchtlichen Verlusten behaftet.

Beim Schalten von einem Gang in einen anderen müssen miteinander zu verbindende Getriebeteile zunächst auf Gleichlauf (d.h. je nach Getriebeart auf gleiche Drehzahl oder gleiche Umfangsgeschwindigkeit) gebracht, d.h. synchronisiert werden. Bei klauengeschalteten Getrieben - die zum Teil für schwere Nutzkraftfahrzeuge verwendet werden - geschieht dies vom Fahrer aus durch Doppelkuppeln (Hochschalten) oder Zwischengas (Rückschalten), was ein hohes Fahrkönnen erfordert. Bei den meisten herkömmlichen Getrieben erfolgt die Synchronisierung mechanisch im Zuge der Schaltbewegung, und zwar durch Reibungsvorkupplung zur kraftschlüssigen Drehzahlangleichung, wobei durch eine Sperreinrichtung das formschlüssige Schalten des Ganges erst nach Abschluß des Synchronisierungsvorgangs ermöglicht wird. Zur Reibungsvorkupplung können z.B. Konusringe dienen. Synchronisierte Getriebe sind konstruktiv und baulich aufwendig. Die Synchronisiereinrichtungen sind hochbeansprucht und verschleißgefährdet. Die für die Synchronisierung erforderlichen Kräfte müssen vom Fahrer mit der Schaltbetätigung aufgebracht werden, was sich in einer relativ hohen Schaltkraft bemerkbar machen kann. Zudem dauert der Synchronisierungsvorgang eine gewisse Zeit, was der Schaltbetätigung i.a. einen zähen Charakter verleiht.

Diese Eigenschaften der Schaltbetätigung tragen dazu bei, daß das Schalten selbst bei geübten Fahrern - auch wenn es bei ihnen keine bewußte Aktivität mehr erfordert - einen nicht vernachlässigbaren Teil der Aufmerksamkeit einnimmt, die eigentlich vollständig für das Verkehrsgeschehen zur Verfügung stehen sollte. Somit wirkt sich auch dies insgesamt nachteilig für die Verkehrssicherheit aus.

Zum Stand der Technik werden folgende Veröffentlichungen genannt: DE 904 737; US 2 654 849; DE 893 299; DE 1 077 072; DE 1 165 422; DE 874 713; DE 1 284 853; E. Blessmann: "Magnetic Couplings", Machine Design, Febr. 9, 1989, 105-108; DE 2 345 018; DE 43 39 252 A1; DE 43 23 602 A1; DE 29 43 563 A1; DE 43 18 944 C1; DE 37 37 192 A1; DE 35 37 994 A1; DE 41 34 268 A1; DE 43 30 193 A1; US 3 870 116; FR 2 481 656; DE 32 43 513 C2; DE 42 02 083 62, DE 42 02 737 A1; DE 1 156 319; DE 43 44 053 A1; DE 30 48 972 62; Patent Abstracts of Japan, M-359, Febr. 22, 1985, Vol. 9, No. 42 8 JP 59-184020; DE 33 38 548 A1; DE 44 08 719 A1; DE 938 680; DE 282 671; US 2 790 917.

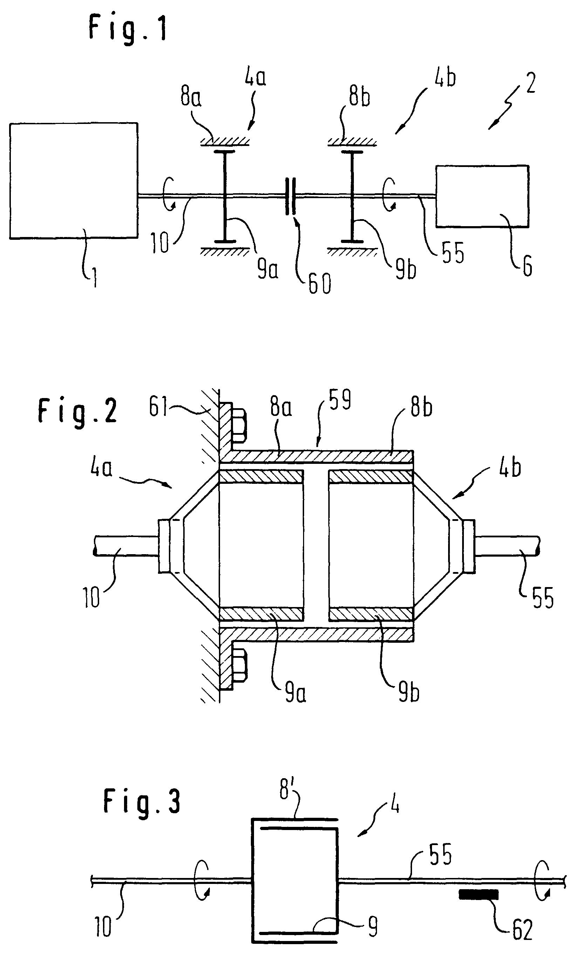

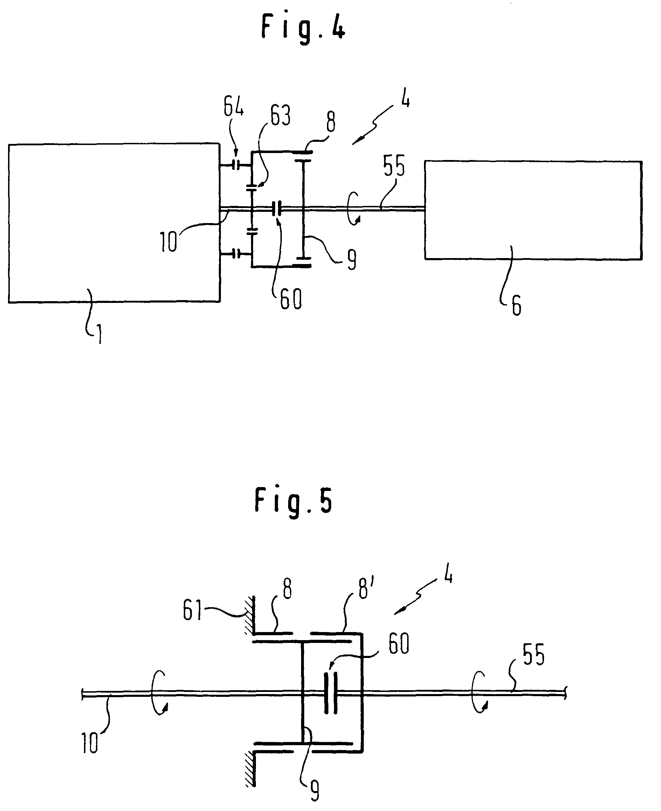

DE-A-3338548 (Seiten 5 - 10; Figuren 1 - 5) offenbart ein Antriebssystem für ein Kraftfahrzeug (siehe D1 Anspruch 1) mit folgenden Merkmalen, wie sie im vorliegenden **Anspruch 1** bzw. **Anspruch 18** definiert sind:
- Verbrennungsmotor (1);
- Antriebsstrang (1 - 7);
- Überbrückungskupplung (9) zwischen Antriebswelle (6) und Abtriebswelle (7);
- elektrische Maschine (2) mit Läufer (3) und Ständer (4), wobei der Läufer (3) mit einer (6) der beiden Wellen (6, 7) drehtest verbunden ist und die Überbrückungskupplung (9) zwischen dem Läufer (3) und der anderen der beiden Wellen (7) angeordnet ist;
- der Ständer (3) ist wahlweise (siehe Alternative auf Seite 10, Absätze 2 und 4: Figur 5 mit vertauschtem Läufer- und Ständerteil wie in Figur 2; Bremse 8 auf der der Maschine 2 zugewandten Seite der Kupplung 11)
   in einem ersten Kopplungszustand, in dem er mit der anderen der beiden Wellen (6) drehtest gekoppelt ist und dadurch mit dieser Welle (6) dreht (Kupplung 11 geschlossen, Anfahren), oder
   in einem weiteren Kopplungszustand, in dem er von der anderen (6) der beiden Wellen (6, 7) abgekoppelt (Kupplung 11) und gegen Drehung festgelegt ist (Läufer 3 direkt gegen Drehung festgelegt, Antrieb allein mit der elektrischen Maschine; Seite 10, Absatz 2, Figuren 5 und 2); und
- der Verbrennungsmotor (1) bringt sein Drehmoment im ersten Kopplungszustand (Anfahren) bei geöffneter Überbrückungskupplung (9; siehe Seite 7, letzter Absatz) über die dann als elektromagnetische Kupplung wirkende elektrische Maschine (2) auf die Antriebsräder (dabei ist allerdings auch der Ständer 4 mit der Antriebswelle 6 verbunden und nur über eine weitere Kupplung 11 eine freie Drehung der Antriebswelle möglich).

In dem weiteren oben festgelegten Kopplungszustand überträgt der Verbrennungsmotor kein Antriebsmoment (rein elektrischer Betrieb).

Ein Betrieb (siehe Merkmale der letzten Absätze der vorliegenden Ansprüche 1 und 18), bei dem die elektrische Maschine zusätzlich zum Drehmoment des Verbrennungsmotors über die dann **geschlossene Überbrückungskupplung** (direkte mechanische Kopplung Verbrennungsmotor - Getriebe bzw. Räder) ein elektrische Drehmoment über einen in diesem Betrieb festgelegten Ständer aufbringt, ist nach der Lehre dieses Dokuments nicht vorgesehen.

AU-A-5840173 (Seiten 1 - 7; Figuren 1 - 17) offenbart ein Antriebssystem für ein Kraftfahrzeug mit folgenden Merkmalen, wie sie im vorliegenden **Anspruch 2** bzw. **Anspruch 19** definiert sind (siehe insbesondere Figur 17 von D2):
- Verbrennungsmotor (siehe Seite 2, Zeile 1);
- Antriebsstrang (IP, G, M, OP);
- Überbrückungskupplung (C) zwischen Antriebswelle (IP) und Abtriebswelle (OP);
- elektrische Maschine (F) mit Läufer (GR, MR) und Ständer (GS, MS), wobei der Läufer (GR, MR) mit einer der beiden Wellen (IP) drehfest (über die Überbrückungskupplung C, die somit **nicht mit der anderen der beiden Wellen**, d.h. der Abtriebswelle OP) verbunden ist;
- der Ständer (GS, MS) ist als Doppeleinheit ausgebildet,
   dessen erste Teileinheit (MS) mit der anderen der beiden Wellen drehfest gekoppelt ist und dadurch mit dieser Welle (OP) dreht, und
   dessen zweite Teileinheit (GS) nicht mit der anderen (OP) der beiden Wellen (IP, OP) gekoppelt, sondern gegen Drehung festgelegt ist,
      wobei jeweils eine der beiden Teileinheiten elektromagnetisch wirksam und die andere unwirksam ist (Fahren und Starten, Seite 4, Zeilen 8 - 20); und
- der Verbrennungsmotor (1) bringt sein Drehmoment im ersten Kopplungszustand (Fahren) (bei **geschlossener Überbrückungskupplung C**) über die dann als elektrische Kupplung wirkende elektrische Maschine (MR MS) auf die Antriebsräder.

Ein Betrieb (siehe Merkmale der letzten Absätre der vorliegenden Ansprüche 2 und 19), bei dem die elektrische Maschine zusätzlich zum Drehmoment des Verbrennungsmotors über eine dann **geschlossene Überbrückungskupplung** (direkte mechanische Kopplung Verbrennungsmotor - Getriebe bzw. Räder) ein elektrische Drehmoment über die drehfeste Ständer-Teleinheit aufbringt, ist nach der Lehre dieses Dokuments ebenfalls nicht vorgesehen.

Der Erfindung liegt das Ziel zugrunde, oben genannte Antriebssysteme weiterzuentwickeln.

Sie erreicht dieses Ziel durch Systeme und Verfahren mit dem Merkmalen der unabhängigen Ansprüche. Bevorzugte Ausgestaltungen sind in den abhängigen Ansprüchen definiert.

Eine "elektrische Maschine" ist jede Art von Maschine für Rotationsbewegungen, die als elektrischer Motor und/oder als elektrischer Generator betrieben werden kann.

Vorzugsweise sitzt die elektrische Maschine - ähnlich einer Reibkupplung - unmittelbar auf den Wellen, deren Kopplung bzw. Trennung sie bewirkt.

Der Begriff "Kupplung" wird im Zusammenhang mit elektromagnetischer Kupplung in einem weiten Sinn verstanden: Er umfaßt die Bedeutung von "Kupplung" im engen Sinn, die ausschließlich der ungeänderten Übertragung von Drehzahl und Drehmoment dient (wie z.B. eine formschlüssige Kupplung), sowie von "Wandler", welcher eine Wandlung von Drehzahl und/oder Drehmoment erlaubt (wie z.B. eine reibschlüssige oder eine hydrodynamische Kupplung).

Bei einer "elekromagnetischen Kupplung" erfolgt die Momentübertragung über die Kupplung hinweg durch elektrische, magnetische oder elektromagnetische Kräfte. Es ist möglich, daß diese Art der Kraftübertragung nur zeitweise vorliegt. Zum Beispiel kann nach Erreichen gleicher Drehzahl der zu kuppelnden Wellen die Kraftübertragung von einer mechanischen Kupplung übernommen werden. Auch eine derartige kombinierte Kupplung wird als "elektromagnetische Kupplung" bezeichnet.

Bei einer "aktiven Getriebesynchronisierung" erfolgt die zum Gleichlauf führende Beschleunigung oder Abbremsung eines der zu verbindenden Getriebeteile nicht passiv durch Vor-Kupplung mit dem anderen Getriebeteil. Vielmehr beschleunigt oder bremst die elektrische Maschine das freilaufende der beiden Getriebeteile beim Schalten aktiv in den Gleichlaufzustand, ohne daß hierfür eine Kopplung oder Vorkopplung mit dem anderen Getriebeteil erforderlich wäre. Mechanische Synchronisiereinrichtungen (Vorkupplung, Konusringe u.ä.) können entfallen. Die erforderliche Gleichlaufdrehzahl kann z.B. bei Erfassung der momentanen Drehzahl der Getriebe-Abtriebswelle auf der Grundlage bekannter Übersetzungsverhältnisse der verschiedenen verbindbaren Getriebeteile schnellstens ermittelt werden, sobald bei der Schaltbetätigung durch Eintritt in eine bestimmte Schaltgasse eindeutig erkennbar ist, welcher Gang eingelegt werden soll. Die Synchronierung kann in der Zeitspanne erfolgen, die bis zum Erreichen des Endes des Schaltweges - wo die Verbindung der Getriebeteile erfolgt - zur Verfügung steht. Die Synchronisierung erfolgt also ohne Schaltkraft und ohne merkliche Verzögerung der Schaltbetätigung.

Besonders vorteilhaft vereint das Antriebssystem die Funktionen von elektromagnetischer Kupplung und aktiver Synchronisiereinrichtung. Beispielsweise bei einfacheren Antriebssystemen kann aber auch jede dieser Funktionen für sich genommen vorteilhaft sein.

Das erfindungsgemäße Antriebssystem hat folgende Vorteile:
- die elektromagnetische Kupplung und/bzw. die aktive Synchronisiereinrichtung unterliegen keinem Verschleiß und keiner Wartung;
- die elektromagnetische Kupplung ermöglicht die genaue Einstellung beliebiger zu übertragender Momente, d.h. Einstellung eines beliebigen Kupplungschlupfes und ist damit steuerungstechnisch anderen bekannten Kupplungen überlegen;
- auch die zeitliche Änderung des Kupplungsschlupfes ist beliebig steuerbar, wodurch ein völlig gleichmäßiger selbsttätiger Übergang von maximalen Schlupf zu verschwindendem Schlupf realisierbar ist;
- die Fahrzeugbedienung ist dadurch auch für ungeübte Fahrer einfacher, Anfahren und/oder Schalten erfolgt völlig ruckfrei, ein Abwürgen des Antriebsaggregats ist ausgeschlossen, was insgesamt einen Gewinn für die Verkehrssicherheit darstellt;
- bei aktiver Getriebe-Synchronisierung kann das Getriebe wesentlich einfacher konstruiert und ausgeführt sein;
- das Schalten kann mit geringerer Schaltkraft und ohne merkliche Zeitverzögerung erfolgen und überläßt dem Fahrer so mehr Aufmerksamkeit für das Verkehrsgeschehen;
- ein Fading der Kupplung, d.h. eine Änderung ihrer physikalischen Eigenschaften infolge von Überhitzung kann vermieden werden.
- der bei herkömmlichen mechanischen Kupplungen übliche Momentensprung beim Übergang von Gleitreibung auf Haftreibung kann vermieden werden; dadurch entfällt ferner sog. "Kupplungsrupfen" bei periodischen Wechsel von Haft- und Gleitreibung;
- es kann ein Gewichtsvorteil (geringeres Gewicht) erzielt werden, da gegenüber einer herkömmlichen mechanischen Kupplung die schwere Druckplatte entfällt;
- mit dem erfindungsgemäßen Antriebssystem können mittels Software unterschiedliche Kupplungskennlinien, d.h. Momentenverlauf während der Kupplungszeit, eingestellt werden; insbesondere kann das Kuppeln auch automatisch erfolgen;
- die als Kupplung wirkende elektrische Maschine benötigt weniger Teile als eine herkömmliche mechanische Kupplung; somit können Herstellungskosten reduziert werden;
- es ist eine Energierückgewinnung durch generatorisches Bremsen der Wellen beim Schalten möglich; während bei einer herkömmlichen, mechanischen Kupplung die Abbremsenergie in Wärme umgesetzt wird, ist bei der als Kupplung arbeitenden elektrischen Maschine die Abbremsenergie in elektrische Energie umwandelbar.

Insgesamt erhöht das erfindungsgemäße Antriebssystem den Fahrkomfort, erleichtert die Fahrzeugbedienung und trägt zu einer Erhöhung der Verkehrssicherheit bei.

Das Antriebssystem umfaßt eine elektrische Maschine, welche wenigstens zwei drehbare elektromagnetische Wirkeinheiten aufweist, von denen eine mit einen antriebsseitigen Drehmomentübertrager und die andere mit einen abtriebsseitigen Drehmomentübertrager gekoppelt oder koppelbar ist. Bei den Drehmomentübertragern handelt es sich i.a. um Antriebs- und Abtriebswelle, etwa die Triebwelle des Antriebsaggregats oder eine mit ihr gekoppelte Welle und die von der elektrischen Maschine zum Getriebe führende Welle. Die elektromagnetischen Wirkeinheiten entsprechen Läufer und Ständer bei der normalen elektrischen Maschine, jedoch mit dem Unterschied, daß hier neben dem Läufer auch der Ständer drehbeweglich ist. Die Maschine entspricht also einer normalen Maschine mit Läufer und Ständer, wobei die Maschine zusätzlich zur Läuferrotation als Ganzes drehbar ist. Die als Ganzes drehbare Maschine kann zwischen Läufer und (drehbaren) Ständer positive und negative Relativdrehmomente erzeugen. Auf diese Weise kann der Kupplungsschupf beeinflußt und verschiedene Kupplungswirkungen erzielt werden: Die elektrische Maschine kann beispielsweise derart geregelt werden, daß sich ein Relativdrehmoment zwischen Läufer und Ständer einstellt, welches dem momentan im Antriebsstrang übertragenen entspricht, so daß der Kupplungsschlupf verschwindet (Kupplungsschlupf Null). Dann überträgt die elektrische Maschine Drehzahl und Drehmoment ungeändert - entsprechend einer geschlossenen mechanischen Kupplung. Die elektrische Maschine kann aber auch derart geregelt werden, daß das Relativdrehmoment zwischen Läufer und Ständer verschwindet und sich ein Kupplungsschlupf entsprechend der Relativdrehzahl der Drehmomentübertrager einstellt. Auf diese Weise erzielt man deren vollständige Trennung ohne Drehmomentübertragung - entsprechend etwa einer vollständig geöffneten mechanischen Kupplung. Kupplungsschlupfwerte, die zwischen diesen beiden Werten liegen, sind durch entsprechende Aussteuerung der elektrischen Maschine ebenfalls erreichbar. Darüber hinaus erschließt die elektrische Maschine vorteilhaft auch Drehmoment-Übertragungsbereiche jenseits dieses durch eine übliche Reibkupplung erschlossenen Bereichs: Durch geeignete Aussteuerung der elektrischen Maschine können Drehmomente aufgeschaltet werden, d.h. Drehmoment in und entgegen der Drehrichtung der Drehmomentübertrager aufgeschaltet werden. Somit können sowohl negative Kupplungsschlupfwerte durch Erzeugen eines zusätzlich zum Antriebsaggregat antreibenden Drehmoments, als auch Kupplungsschlupfwerte größer als eins - durch Erzeugen eines dem Antreibsaggregat entgegengerichteten bremsenden Drehmoments - eingestellt werden.

Die vom Antrieb gelieferte mechanische Drehenergie wird also über ein Paar mit einstellbarem Schlupf relativdrehender elektromagnetischer Wirkflächen direkt in Form mechanischer Drehenergie weitergegeben. Aus mechanischer in elektrische Energie oder umgekehrt wird hierbei nur der aufgrund von Schlupf vorliegende Überschuß- bzw. Unterschußanteil verwandelt, der in einem Speicher für elektrische Energie gespeichert bzw. aus einem solchen entnommen werden kann. Falls die Überschußenergie und/oder -leistung das Speicheraufnahmevermögen übersteigt - was z.B. beim Anfahren mit "schleifender" Kupplung der Fall sein kann - kann die Energie auch dissipiert werden, z.B. in Form von Wärme (über Heizwiderstände etc.).

Die Synchronisierfunktion - also Beschleunigen oder Abbremsen des abtriebsseitigen Drehmomentübertragers bei herausgenommenem Gang - erfolgt in Abstützung gegen den mit veränderlicher Drehzahl drehenden antriebsseitigen Drehmomentübertrager. Dessen momentan vorliegende Drehzahl wird bei der Ermittlung der zum Erreichen des Gleichlaufs nötigen Relativdrehzahl zwischen den Wirkelementen berücksichtigt.

Bei der elektromagnetischen Kupplung ist - im Gegensatz zur hydrodynamischen Kupplung - ein verschwindender Kupplungsschlupf einstellbar. Beispielsweise erzielt man dies bei einer Asynchronmaschine durch ein von einer der Wirkeinheiten (z.B. vom drehbaren Ständer) erzeugtes Drehfeld, welches sich relativ zur Wirkeinheit dreht und durch den so erzeugten elektromagnetischen Schlupf auf die andere Wirkeinheit ein Drehmoment ausübt, das dem momentanen Antriebsmoment betragsmäßig gleicht, aber in der Richtung entgegengesetzt ist, und so ein Verschwinden des Kupplungsschlupfes bewirkt. Bei einer Synchronmaschine ist kein elektromagnetischer Schlupf erforderlich - hier geht das Drehfeld im Grenzfall verschwindenden Kupplungsschlupfes in ein statisches magnetisches Feld - bezogen auf die Wirkeinheit (z.B. den drehbaren Ständer) - über. Man muß zum Verschwindenlassen des Kupplungsschlupfes eine gewisse Energie aufwenden, und zwar z.B. Beispiel zur Erzeugung des Drehfelds mit elektromagnetischem Schlupf bzw. des statischen Feldes. Um diese Verlustenergie zu minimieren, sind die Drehmomentübertrager, welche die elektromagnetische Kupplung trennt, mit einer Überbrückungskupplung, insbesondere einer mechanischen Kupplung, verbindbar. Hierbei kann es sich z.B. um eine reibschlüssige oder - da ihr Einkuppeln durch entsprechende Steuerung immer bei verschwindendem Kupplungsschlupf möglich ist - vorteilhaft um eine formschlüssige Kupplung, z.B. eine Klauenkupplung handeln. Statt eine gesonderte Kupplung vorzusehen, können auch die beiden Wirkeinheiten durch Axialverschiebung miteinander in Reib- oder Formschluß bringbar sein.

Eine Reihe von Zusatzfunktionen der elektrischen Maschine sind in vorteilhafter Weise oder sogar ausschließlich mit gegen Drehung festgelegtem Ständer erzielbar. Um einige oder alle dieser Zusatztunktionen auch mit der drehbaren Einzelmaschine zu erschließen, ist vorzugsweise die Wirkung wenigstens einer ihrer beiden elektromagnetischen Wirkein heiten durch die Wirkung einer nicht-drehbaren Wirkeinheit ersetzbar. Die Wirkungsersetzung kann erfolgen, wenn keine Kupplungsfunktion benötigt wird, also etwa wenn bei dem Fahrzeug der Gang herausgenommen ist (im Stand oder während des Schaltens) oder wenn die ggf. vorhandene Überbrückungskupplung geschlossen ist. Für die Art und Weise, wie diese Wirkungsersetzung erfolgt, gibt es verschiedene vorteilhafte Möglichkeiten:

Bei einer ersten, sehr einfachen Möglichkeit erfolgt die Wirkungsersetzung dadurch, daß wenigstens eine der drehbaren Wirkeinheiten, insbesondere die abtriebsseitige (d.h. die getriebeseitige), gegen Drehung festlegbar ist, insbesondere mit Hilfe einer mechanischen Bremse oder Kupplung. Es wird also nicht etwa die drehbare Wirkeinheit durch eine feststehende ersetzt, die verschiedenen Wirkungen werden vielmehr von ein- und derselben Wirkeinheit hervorgerufen, die nur festgelegt und wieder freigegeben wird. Die Festlegung kann unmittelbar oder mittelbar, etwa durch Festlegung des zugehörigen Drehmomentübertragers erfolgen. Eine abtriebsseitige Festlegung - die i.a. nur bei herausgenommenem Gang (insbesondere im Stand des Fahrzeugs) durchführbar ist - erschließt zwei Funktionen, nämlich einerseits eine aktive Verringerung von Drehungleichförmigkeiten der (antriebsseitigen) Triebwelle durch Aufbringen eines schnell alternierenden Wechseldrehmoments, das z.B. im wesentlichen gegenphasig zu Drehungleichförmigkeiten des Antriebsaggregats erzeugt wird sowie andererseits ein Starten des Antriebsaggregats im Zusammenlauf aus dem Stand (sog. Direkt-Starten).

Eine zweite Art der Wirkungsersetzung erschließt weitere Funktionen im angetriebenen Zustand des Systems, und zwar bei Betrieb mit geschlossener Überbrückungskupplung und während des Schaltens. Die Wirkungsersetzung erfolgt dadurch, daß wenigstens eine der drehbaren Wirkeinheiten von ihrem Drehmomentübertrager abkoppelbar ist und gegen Drehung festlegbar ist, insbesondere mit Hilfe einer oder mehrerer mechanischer Kupplungen. Auch hier werden die verschiedenen Wirkungen von ein- und derselben Wirkeinheit hervorgerufen, die nur festgelegt und von ihrem Drehmomentübertrager entkoppelt und wieder freigegeben und mit ihrem Drehmomentübertrager gekoppelt wird. Der Unterschied zur ersten Art besteht in der zusätzlichen Abkoppelbarkeit der festlegbaren Wirkeinheit von ihrem Drehmomentübertrager. Dies erlaubt - im Gegensatz zur ersten Art - die Festlegung des Wirkelements auch bei drehendem zugehörigen Drehmomentübertrager, also auch im Antriebszustand des Systems. Die mechanischen Kupplungen zum Festlegen und Abkoppeln können vorteilhaft formschlüssig sein, da die festlegbare Wirkeinheit nach dem Abkoppeln durch die elektrische Maschine selbst zum Stillstand gebracht werden kann, so daß dann ihre Festlegung durch eine formschlüssige Kupplung möglich ist. Entsprechend kann sie zum Koppeln mit dem Drehmomentübertrager auf dessen Drehzahl gebracht werden. Diese zweite Art erschließt die Funktion einer aktiven Verringerung von Drehungleichförmigkeiten der (antriebsseitigen) Triebwelle auch im Antriebszustand. Sie erlaubt ferner die Synchronisierfunktion in Abstützung gegen das festgelegte Wirkelement auszuführen, was steuerungstechnisch einfacher als der o.g. Fall einer Abstützung gegen den mit veränderlicher Drehzahl drehenden antriebsseitigen Drehmomentübertrager. Eine Voraussetzung für letzteres ist jedoch, daß die Überbrückungskupplung (oder eine andere zusätzliche Kupplung) so angeordnet ist, daß sie eine Trennung des drehbar verbliebenen Wirkelements vom Antriebsaggregat erlaubt.

Die dritte Art der Wirkungsersetzung entspricht der zweiten Art vom Ergebnis her. Im Unterschied zu jener ist jedoch bei ihr die in ihrer Wirkung zu ersetzende elektromagnetische Wirkeinheit doppelt vorhanden, und zwar als drehbare und als nicht-drehbare Wirkeinheit. Die Wirkungsersetzung erfolgt dadurch, daß die drehbare Wirkeinheit elektromagnetisch unwirksam und die nicht-drehbare wirksam gemacht wird, vorzugsweise indem die Speisung mit drehmomenterzeugender bzw. -übertragender elektrischer Energie von der drehbaren auf die nicht-drehbare Wirkeinheit umgeschaltet wird. Vorteilhaft dient hierzu ein entsprechend umschaltbarer Stromrichter bzw. Wechselrichter.

Falls man bei dieser Maschine die zusätzlich zur (ersten) drehbaren Wirkeinheit vorhandene festliegende Wirkeinheit so ansteuert, daß sie gleichzeitig mit jener Wirkeinheit eine ihr gegenüber eigenständige Wirkung auf die andere (zweite) drehbare Wirkeinheit ausüben kann, erhält man eine Maschine mit weitergehenden Funktionsmöglichkeiten. Vorteilhaft erzielt man diese Ansteuerung, indem die erste drehbare und die nicht-drehbare Wirkeinheit eigenständig mit drehmomenterzeugender bzw. -übertragender elektrischer Energie gespeist werden, z.B. durch zwei im wesentlichen unabhängige Stromrichter bzw. Wechselrichter. Mit dieser Ausgestaltung ist es insbesondere möglich, auch während die elektromagnetische Kupplungsfunktion aktiviert ist (z.B. bei offener oder nicht vorhandener Überbrückungskupplung), Drehungleichförmigkeiten des antriebsseitigen Drehmomentübertragers aktiv zu verringern. Eine Voraussetzung für die Zusatzfunktion ist, daß die zweite drehbare Wirkeinheit mit dem antriebsseitigen Drehmomentübertrager gekoppelt ist.

Vorteilhaft umfaßt die Kupplungsfunktion der elektrische Maschine die Funktionen einer Anfahrkupplung und/oder Schaltkupplung. Bei einer Funktion als Anfahrkupplung muß die elektrische Maschine hohe Leistung aufbringen können, was eine entsprechende große Dimensionierung des gesamten Systems erforderlich macht. Zudem kann der Energieüberschuß beim Anfahren mit großem Kupplungsschlupf recht große Werte annehmen. Bei kleiner dimensionierten elektrische Maschinen und ggf. nicht ausreichender Energiespeichermöglichkeit kann es daher vorteilhaft sein, die elektromagnetische Kupplungsfunktion auf die Schaltfunktion zu beschränken und die Anfahrkupplungsfunktion - bei überbrückter elektromagnetischer Kupplung - einer zusätzlich vorhandenen reibschlüssigen oder hydrodynamischen Kupplung zu überlassen.

Eine weitere Möglichkeit besteht darin, die elektrische Maschine als Überlastkupplung zu verwenden, d.h. daß auch die Funktion des Überlastschutzes von der elektrischen Maschine erzielt wird. Ferner kann die als Kupplung wirkende elektrische Maschine zur Schwingungsdämpfung verwendet werden. Dabei kann die Kupplung so eingestellt werden, daß sie die Drehmomentspitzen abnimmt und dadurch eine die Drehmoment-Ungleichförmigkeit verringernde Wirkung erzielt wird.

Grundsätzlich ist die elektrische Maschine so dimensioniert, daß sie das Antriebsaggregat direkt starten kann (d.h. im Zusammenlauf aus dem Stand). Hierfür müssen relativ große Drehmomente aufgebracht werden. Als Alternative für den Fall kleinerer gelieferter Drehmomente kann die elektrischen Maschine als Schwungmassen-Starter mit elektromagnetisch kuppelbarer Schwungmasse dienen. Dies ermöglicht ein Starten auch in Fällen, in denen die elektrische Maschine das nötige Drehmoment für ein Direkt-starten nicht aufbringen kann. Als Schwungmasse dient vorzugsweise ein Teil der elektrischen Maschine selbst, z.B. deren abtriebsseitige Wirkeinheit, zusammen mit dem daran gekoppelten Drehmomentübertrager. Bei freigeschaltetem Gang läßt sich diese in Abstützung gegen die Massenträgheit der Triebwelle und die Kompression des Verbrennungsmotors elektromotorisch auf hohe Drehzahlen hochdrehen. Durch elektromagnetisches Einkuppeln mit Hilfe der elektrischen Maschine selbst wird die Schwungmasse schnell abgebremst und dadurch die Triebwelle derart beschleunigt, daß der Verbrennungsmotor startet. Vorteil gegenüber bekannten Schwungrad-Startern mit mechanischer Einkopplung des Schwungrads (siehe z.B. das Buch D. Henneberger "Elektrische Motorausrüstung", Braunschweig 1990, Seiten 98-103) ist die Vermeidung von Kupplungsverschleiß und die genaue Steuerbarkeit des Einkupplungsvorgangs.

Vorteilhaft ist die elektrische Maschine eine Dreh- oder Wanderfeldmaschine. Unter "Drehfeldmaschine" wird - im Gegensatz zu einer Stromwendermaschine - eine Maschine verstanden, in der ein magnetisches Drehfeld (relativ zum ggf. drehbaren Ständer) auftritt. Hierbei kann es sich z.B. um eine Asynchron- oder Synchronmaschine, insbesondere für Dreiphasenstrom, oder um eine Maschine mit elektronischer Kommutierung handeln. Bei einer Drehfeldmaschine überstreicht das magnetische Feld einen vollen 360°-Grad-Umlauf, bei einer Wanderfeldmaschine hingegen nur einen oder mehrere Ausschnitte hiervon.

Das Antriebssystem weist vorzugsweise wenigstens einen Wechseirichter zum Erzeugen der für die magnetischen Felder der elektrischen Maschine benötigten Spannungen und/oder Ströme variabler Frequenz, Amplitude und/oder Phase auf. Der Wechselrichter kann die für die magnetischen Felder (insb. Dreh- bzw. Wanderfelder) benötigten Spannungen und/oder Ströme mit (innerhalb gewisser Grenzen) frei wählbarer Frequenz, Amplitude oder Phase oder beliebiger Kombinationen dieser Größen erzeugen. Er kann dies vorteilhaft mit Hilfe elektronischer Schalter aus einer vorgegebenen Gleich- oder Wechselspannung oder einem vorgegebenen Gleich- oder Wechselstrom tun. Besonders vorteilhaft sind alle drei Größen - Frequenz, Amplitude und Phase - frei wählbar. Ein Wechselrichter hat u.a. den Vorteil, die elektrische Maschine mit hoher Variabilität bei unterschiedlichsten Betriebszuständen, ggf. - wie unten noch näher erläutert wird - auch in einem Betrieb mit schnell alternierenden Drehmoment, gqf. mit überlagertem Zusatz-Drehmoment betreiben zu können.

Vorteilhaft erfüllt die elektrische Maschine während oder zeitlich versetzt zu ihrer Kupplungs- und/oder Synchronisierungsfunktion die Funktion einer aktiven Verringerung von Drehungleichförmigkeiten. Während der elektromagnetischen Kupplungsfunktion bei nicht festgelegtem Ständer erfolgt dies durch einen mit den Drehungleichförmigkeiten variierenden Kupplungsschlupf. Als Folge läßt die elektromagnetische Kupplung Drehungleichförmigkeiten nicht mehr vom Antriebsaggregat in den Antriebsstrang durchtreten, wirkt also als Schwingungsisolierung. Bei festgelegtem Ständer erfolgt die Drehungleichförmigkeitsverringerung - wie oben bereits ausgeführt wurde - durch Aufbringen von insbesondere gegenphasigen Drehmomenten. Vorschläge für Vorrichtungen zur aktiven Verringerung von Drehungleichförmigkeiten offenbaren Patent Abstracts of Japan, Band 11, Nr. 28 (M-557), 27. Januar 1987 & JP-A-61 200 333, Patent Abstracts of Japan, Band 4, Nr. 29 (M-002), 14. März 1980 & JP-A-55 005 454, EP-B-0 427 568, DE-A-32 30 607, EP-B-0 175 952, Patent Abstracts of Japan, Band 7, Nr. 240 (M-251), 25. Oktober 1983 & JP-A-58 126 434 und DE-A-41 00 937.

Bei den Drehungleichförmigkeiten kann es sich insbesondere um solche handeln, die bei einem Verbrennungsmotor, insbesondere einem Hubkolbenmotor mit innerer Verbrennung, durch die auf die Triebwelle (d.h. insbesondere die Kurbelwelle) wirkenden Gas- und Massenkräfte der einzelnen Hubkolben auftreten. Beispielsweise treten bei einem Vierzylinder-Viertaktmotor relativ große Drehungleichförmigkeiten in der zweiten Ordnung (d.h. dein zweifachen der Drehfrequenz des Motors) auf.

Grundsätzlich kann die die elektrische Maschine so gesteuert werden, daß sie entweder nur Drehungleichförmigkeiten zum Schnellen hin (sog. positive Drehungleichförmigkeiten) oder zum Langsamen hin (sog. negative Drehungleichförmigkeiten) entgegenwirkt. Besonders wirksam ist jedoch eine Betriebsweise, bei der sie sowohl negativen als auch positiven Drehungleichförmigkeiten entgegenwirkt, bevorzugt indem sie ein schnell variierendes Drehmoment (sog. Wechsel-Drehmoment) erzeugt, insbesondere ein alternierendes Drehmoment. Zum Beispiel kann dies bei einer positiven Drehungleichförmigkeit ein kupplungsschlupfvergrößerndes bzw. bremsendes und bei einer negativen Drehungleichförmigkeit ein kupplungsschlupfverkleinerndes (ggf. zu negativen Kupplungsschlupfwerten) bzw. antreibendes Drehmoment sein.

Vorteilhaft können die schnell variierenden Wechseldrehmomente den konstanten oder langsam variierenden Drehmomenten (sog. Gleichdrehmomenten) überlagert werden, welche zur Erzielung der Kupplungs- und/oder der Synchronisierungsfunktion sowie ggf. weiterer Funktionen mit antreibender oder bremsender Wirkung erzeugt werden. Die Überlagerung ist insbesondere additiv.

Unter einer "schnellen Variation" wird eine Variation im Frequenzbereich der zu verringernden Drehungleichförmigkeiten verstanden, also z.B. bei der Drehungleichförmigkeit der 2. Ordnung und bei einer Drehzahl von 3000 U/min eine Variation mit einer Frequenz von 100 Hz. Relativ dazu variiert das Gleich-Drehmoment im allgemeinen langsamer.

Beim Betrieb mit Kupplungsschlupf fällt überschüssige Energie an, die bei einer herkömmlichen mechanischen oder hydrodynamischen Kupplung hauptsächlich in Verlustwärme unigewandelt wird. Bei der erfindungsgemäßen elektrische Maschine handelt es sich vorzugsweise nicht um eine Maschine nach Art einer Wirbelstrombremse, bei der ebenfalls nur Verlustwärme erzeugt würde, sondern um eine generatorisch arbeitende Maschine, welche die Überschußenergie in elektrische Energie verwandelt. Diese kann vorteilhaft gespeichert und wiederverwendet werden. Nur falls die Speicherkapazität nicht ausreicht, (etwa bei extremer Fahrzeugbeschleunigung mit rutschender Kupplung), muß die Überschußenergie verheizt werden. Auch die bei anderen Bremsfunktionen anfallende Energie kann vorteilhaft wenigstens teilweise gespeichert werden. Derartige Bremsfunktionen können z.B. dazu dienen, daß die elektrische Maschine eine bremsende Synchronisier-Funktion ausübt, als Generator zur Stromversorgung fungiert und/oder (bei festgelegten Ständer) eine Bremsung des Fahrzeugs herbeiführt und/oder im Rahmen einer Antriebs-Schlupf-Regelung durch Bremsen den Schlupf eines Antriebsrads verringert. Eine weitere Bremsfunktion kann die Maschine im Rahmen des schnell variierenden Moments zur Drehungleichförmigkeitsverringerung ausüben. Die bei Anwenden dieser Bremstunktionen generatorisch gewonnene Bremsenergie kann gespeichert werden (z.B. in einem elektrischen Speicher oder in einen Schwungradspeicher) und als Antriebsenergie für die elektrische Maschine wiederverwendet oder in ein Netz oder z.B. die Fahrzeugbatterie eingespeist werden. Ein antreibendes Drehmoment kann z.B. einer beschleunigenden Synchronisierfunktion dienen oder (bei festgelegtem Ständer) das Antriebsaggregat bei einer Beschleunigung des Fahrzeugs unterstützen beispielsweise um Beschleunigungslöcher, etwa bei einem Turbolader-Motor, zu füllen, oder kann im Rahmen des schnell variierenden Moments der Drehungleichförmigkeitsverringerung dienen. Diese Rekuperation von Bremsenergie dient der Erzielung eines möglichst hohen Gesamtwirkungsgrad des Antriebssystems.

Das Verheizen von Energie kann vorteilhaft über einen elektrischen Widerstand erfolgen, der selbst luftgekühlt sein kann oder seine Wärme in ein vorhandenes Kühlsystem eines Fahrzeugs, z.B. des Kühlkreislauf eines Verbrennungsmotors abgeben kann. Die Speicherung der Bremsenergie (Gleichdrehmoment und/oder Wechseldrehmoment-Bremsenergie) kann insbesondere durch einen elektrischen Speicher und/oder einen mechanischen Speicher (Schwungradspeicher) erfolgen: Als elektrischer Speicher kann beispielsweise eine Kapazität, Induktivität oder eine (schnelle) Batterie dienen. Vorteilhaft ist der Wechselrichter (falls vorhanden) ein Zwischenkreis-Wechselrichter, dessen Zwischenkreis wenigstens einen elektrischen Speicher für Bremsenergie aufweist oder mit wenigstens einem solchen gekoppelt ist. Der Speicher kann entweder ausschließlich der Speicherung von Bremsenergie dienen (in diesem Fall wäre er z.B. zusätzlich zu einem üblicherweise vorhandenen Zwischenkreis-Speicher geschaltet, welcher die beim Wechselrichter-Taktbetrieb erforderlichen Spannungs- bzw. Stromimpulse liefern kann), oder er kann nur teilweise der Speicherung der Bremsenergie dienen, also noch andere Energie - z.B. die zum Taktbetrieb nötige - speichern (im letzteren Fall könnte er z.B. mit dem üblichen Zwischenkreis-Speicher zusammenfallen). Im übrigen kann die Ausbildung des Stromrichters als Zwischenkreis-Stromrichter in jedem Fall - z.B. auch ohne Zwischenspeicherung von Bremsenergie - vorteilhaft sein.

Unter einem "Zwischenkreis" versteht man einen Kreis, welcher im wesentlichen Gleichspannung bzw. -strom liefern kann, aus der ein nachgeschalteter Wechselrichter-Teil (der sog. Maschinen-Wechselrichter) durch Pulsen oder Takten variable Wechselspannungen bzw. -ströme bilden kann. Diese Gleichspannung bzw. dieser Gleichstrom muß Spannungs- bzw. Stromimpulse mit extremer Flankensteilheit und auf hohem Spannungs- bzw. Stromniveau bereitstellen können. Im allgemeinen umfaßt ein Zwischenkreis-Wechselrichter drei Baugruppen, und zwar eine Eingangsbaugruppe zur Versorgung mit bzw. Abfuhr von elektrischer Energie, eine Ausgangsbaugruppe in Form des Maschinen-Wechselrichters und den dazwischenliegenden Zwischenkreis.

Bei einem Schwungradspeicher kann vorzugsweise das Schwungrad elektrisch über eine (weitere) elektrische Maschine mit dem System gekoppelt sein. Hierbei kann es sich z.B. um eine von einem eigenen Stromrichter gesteuerte Drehfeld- oder Stromwendermaschine handeln. Die erste elektrische Maschine und die Schwungrad-Maschine arbeiten im Gegentakt: Wenn erstere bremsend wirkt, beschleunigt zweitere das Schwungrad bzw. wenn erstere antreibend wirkt, bremst zweitere das Schwungrad. Da mit einem solchen Schwungrad-Energiespeicher relativ hohe Energiedichten gespeichert werden können, ist seine Verwendung insbesondere dann vorteilhaft, wenn Anfahrkupplungsschlupf-Energie gespeichert werden soll.

Die elektrische Maschine für die Kupplungs- und/oder Synchronisierungsfunktion kann - neben diesen Funktionen und der ggf. ausgeführten aktiven Verringerung von Drehungleichförmigkeiten - gleichzeitig oder zeitlich versetzt weitere Funktionen erfüllen und so herkömmlicherweise zusätzlich vorhandene, hierauf spezialisierte Maschinen ersetzen. Insbesondere kann sie außerdem die Funktion eines Direkt-Starters und/oder eines Generators zur Stromversorgung, z.B. zur Ladung einer Batterie oder Speisung eines Bordnetzes, haben. Ein Direkt-Starter kann - anders als ein Schwungrad-Starter - das Antriebsaggregat im Zusammenlauf aus dem Stand starten. Die elektrische Maschine sitzt vorzugsweise direkt (d.h. getriebelos) auf der Triebwelle des Antriebsaggregats oder einer mit ihr gekoppelten Welle. Vorzugsweise ist die als Direkt-Starter wirkende elektrische Maschine so ausgebildet, daß sie beim Starten wenigstens im wesentlichen bis zum Erreichen der Leerlauf-Drehzahl des Antriebsaggregats (welche bei Betriebstemperatur üblicherweise zwischen 600 und 800 U/min liegt) antreibend wirkt. Diese Maßnahmen läßt den Verbrennungsmotor erst bei Erreichen seiner Leerlaufdrehzahl aus eigener Kraft anlaufen, was den Kraftstoffverbrauch vermindert, die besonders schädlichen Emissionen beim Starten vermeidet und den Startvorgang schneller macht.

Die elektrische Maschine kann für weitere Zusatzfunktionen antreibende und/oder abbremsende Drehmomente erzeugen. Beispielsweise kann dies der Beschleunigung eines Kraftfahrzeugs zusammen mit dein Antriebsaggregat dienen. Zum Abbremsen eines Fahrzeugs kann die elektrische Maschine als verschleißfreie, ggf. generatorische Bremse oder Zusatzbremse dienen. Im Zusammenhang mit einer Antriebs-Schlupf-Regelung (ASR) kann die elektrische Maschine durch Bremsen schnell das Gesamt-Antriebsmoment und damit den Schlupf eines oder mehrerer Antriebsräder verringern. Statt durch Bremsen kann der Antriebsrad-Schlupf auch durch Vergrößern des Kupplungs-Schlupfes (bei als elektromagnetischer Kupplung wirkender Maschine) verringert werden. Hierbei gewonnene Bremsenergie kann gespeichert und wiederverwendet werden.

Zur Versorgung von Hochleistungsverbrauchern, wie Hilfsmaschinen (Klimamaschinen, Servoantriebe, Pumpen) und Heizungen) ist es vorteilhaft, daß die elektrische Maschine Strom auf relativ hohem Spannungsniveau, vorzugsweise im oberen Bereich der Niederspannung, wo gerade noch nicht für besonderen Berührungsschutz gesorgt werden muß (z.B. etwa 60 V Gleichspannung) liefert. Geht man darüber hinaus, wird vorzugsweise ein Bereich von 250 - 450 Volt gewählt. Vorteilhaft werden die Hochleistungsverbraucher elektrisch (statt wie bisher mechanisch bzw. durch Abwärme) auf diesen hohen Spannungsniveaus angetrieben (bzw. beheizt). Derart hohe Spannungsniveaus können insbesondere bei einem Zwischenkreis-Wechselrichter im Zwischenkreis bereits vorliegen, und braucht so nicht besonders für diesen Zusatzzweck erzeugt werden. Für Niederleistungsverbraucher kann ein kerkömmliches Niederspannungsbordnetz (12 V oder 24 V) vorgesehen sein. Die Fahrzeugbatterie kann im im Bereich des höheren Spannungsniveaus oder ggf. des Niederspannungsbordnetzes angeordnet sein.

Die ggf. vorgesehene Zusatztunktion einer aktiven Verringerung von Drehungleichförmigkeiten beruht - wie oben erwähnt - darauf, daß die elektrische Maschine positiven und/oder negativen Drehungleichförmigkeiten entgegenwirkt, also z.B. bei positiven Drehungleichförmigkeiten kupplungsschupfvergrößernd oder bremsend und/oder bei negativen kupplungsschlupfverkleinernd oder antreibend wirkt. Die Steuerung der elektrischen Maschine kann durch (rückgekoppelte) Regelung auf der Grundlage einer Messung der momentanen Drehungleichförmigkeit oder einer anderen, mit ihr gekoppelten Größe, oder durch (nicht-rückgekoppelte) Steuerung auf der Grundlage nicht der tatsächlichen, sondern der erwarteten Drehungleichförmigkeit erfolgen. Als Beispiel für eine Steuerung kann man an einem Prototyp eines Verbrennungsmotors als Funktion des (Kurbel)-Wellenwinkels und eines oder weiterer Betriebsparameter (z.B. Drehzahl und Drosselklappenstellung) bestimmte Drehungleichförmigkeiten in Abhängigkeit von dem momentan vorliegenden Kurbelwellenwinkel und den weiteren Betriebsparametern aus einem Kennfeld auslesen und die elektrische Maschine entsprechend ansteuern, um der erwareten Drehungleichförmigkeit entgegenzuwirken. Möglich sind auch Mischformen, z.B. eine adaptive Steuerung, d.h. eine Steuerung mit Rückkopplung, bei der sich die gemessene Information jedoch (anders als bei rückgekoppelter Regelung) nicht instantan, sondern erst bei späteren Drehungleichförmigekeiten auswirkt.

Die Messung von Drehungleichförmigkeiten kann eine direkte sein, z.B. beruhend auf einer Messung der Winkellage oder -geschwindigkeit als Funktion der Zeit oder eine indirekte, z.B. durch Messung des Gasdrucks in einem oder mehreren Motorzylindern und/oder des momentanen Drehmoments des Verbrennungsmotors, z.B. gemessen mit HIlfe einer Drehmomentnabe (wobei als weitere, im wesentlichen unveränderliche Quelle die Massenkräfte zu berücksichtigen sind).

Die elektrische Dreh- bzw. Wanderfeldmaschine des Antriebssystems ist vorzugsweise eine Asynchronmaschine, eine Synchronmaschine oder eine Reluktanzmaschine, insbesondere für Drei-Phasen-Strom. Eine Asynchronmaschine hat i.a. einen relativ einfach aufgebauten Läufer (i. a. einen Läufer mit Kurzschlußwicklungen oder Wicklungen, deren Enden an Schleifringe geführt sind). Hingegen haben Synchronmaschinen Läufer mit ausgeprägten magnetischen Polen, z.B. Permanentmagnete oder Elektromagente, die z.B. über Schleifringe mit Strom gespeist werden. Reluktanzmaschinen gehören im weiteren Sinn zu den Synchronmaschinen. Insbesondere bei der Asynchronmaschine erfolgt die Steuerung der elektrischen Maschine vorzugsweise auf der Grundlage einer feldorientierten Regelung (sog. Vektorregelung). Hierbei wird, ausgehend von direkt meßbaren momentanen Größen, wie angelegte Spannung, Ständerstrom und ggf. Drehzahl, anhand eines rechnerischen dynamischen Maschinenmodells der Ständerstrom in eine drehmomentbildende Komponente, die mit dem Läuferfluß das Drehmoment erzeugt, und eine senkrecht dazu verlaufende, den Maschinenfluß erzeugende Komponente rechnerisch zerlegt und so das Drehmoment ermittelt.

Bei der elektrischen Maschine samt zugehöriger Steuereinrichtung handelt es sich um ein Hilfssystem, das z.B. im Triebstrang eines Kraftfahrzeugs anstelle oder zusätzlich zu der herkömmlichen Kupplung angeordnet ist. Wegen seines Hilfs-Charakters sollte es relativ zum Antriebsaggregat wenig Raum beanspruchen, sollte also möglichst kompakt aufgebaut sein. Die im folgenden genannten vorteilhaften Maßnahmen dienen - neben anderen vorteilhaften Zwecken - einem solch kompakten Aufbau.

Eine Maßnahme zur Erzielung hoher Kompaktheit liegt darin, daß die elektrische Maschine eine feine Polteilung, insbesondere wenigstens einen Pol pro 45°-Ständerwinkel aufweist. Bei einer kreisförmig geschlossenen (360°-)Drehfeldmaschine entspricht dies einer Gesamtzahl von wenigstens acht Polen. Besonders vorteilhaft sind noch feinere Polteilungen, entsprechend z.B. 10, 12, 14, 16 oder mehr Polen bei der kreisförmig geschlossenen Maschine. Eine feine Polteilung erlaubt es nämlich, die Wickelköpfe des Ständers klein auszubilden, und zwar sowohl in Axial- wie auch in Umfangsrichtung der Maschine, so daß die Maschine in Axialrichtung insgesamt kürzer ausgebildet sein kann. Auch kann bei feinerer Polteilung der Ständerrücken für den magnetischen Rückfluß dünner (und damit auch leichter) ausgebildet sein, mit der Folge, daß bei gleichem Außendurchmesser der Maschine der Läufer einen größeren Durchmesser haben kann. Größerer Läuferdurchmesser führt wegen des in Umfangsrichtung längeren Luftspaltes und des größeren wirksamen Hebelarms zu einem größeren Drehmoment. Insgesamt führt somit eine feinere Polteilung zu einer kompakteren und leichteren Maschine. Daneben sind wegen der geringeren Wickeldrahtlänge - kleinere Wickelköpfe benötigen weniger nicht-aktiven Wicklungsdraht - die ohmschen Verluste geringer. Da ferner das Streufeld (das den Blindleistungsanteil wesentlich bestimmt) von der Wickelkopffläche abhängt, ist es bei feiner Polteilung relativ gering. Ein geringes Streufeld ist insbesondere bei der Drehungleichförmigkeits-Verringerung vorteilhaft, da hier - anders als bei einer üblichen elektrischen Maschine - dauernd zwischen Motor- und Generatorbetrieb hin- und hergewechselt wird und bei dem damit einhergehenden Umpolen laufend Blindleistung aufgebracht werden muß.

Bei schnell laufenden Drehfeld-Maschinen sind feine Polteilungen unüblich, da sie eine relativ hohe Polwechselfrequenz bedingen. Ein üblicher Wert für die Polwechselfrequenz beträgt beispielsweise 120 Hz. Die im Rahmen der Erfindung verwendete elektrische Maschine hat hingegen vorteilhaft eine hohe maximale Polwechselfrequenz, vorzugsweise zwischen 300 und 1600 Hz und mehr, besonders vorzugsweise zwischen 400 Hz und 1500 Hz.

Um den Einfluß von Wirbeiströmen im Ständer - die mit steigender Polwechselfrequenz zunehmen - zu verringern, weist der Ständer vorteilhaft dünne Ständerbleche, vorzugsweise mit einer Dicke von 0,35 mm oder weniger, besonders vorzugsweise 0,25 zum oder weniger auf. Als weitere Maßnahme zur Verringerung der Verluste sind die Ständerbleche vorzugsweise aus einem Material mit niedrigen Ummagnetisierungsverlusten, insbesondere kleiner als 1 Watt/kg bei 50 Hz und 1 Tesla, gefertigt.

Als weitere Maßnahme, die zu einer kompakten Ausbildung beiträgt, weist die elektrische Maschine vorteilhaft eine innere Fluidkühlung mit einer Kühlflüssigkeit wie z.B. Öl auf. Eine sehr effektive Kühltechnik besteht darin, die Maschine im Inneren ganz mit Kühlfluid zu fluten. Ein Nachteil hiervon ist jedoch, daß oberhalb ca. 500 U/min Turbulenzverluste auftreten, die oberhalb ca. 2000 U/min merkliche Ausmaße annehmen können. Um dem zu begegnen, erfolgt die Zufuhr des Kühlfluids vorteilhaft verlustleistungs- und/oder drehzahlabhängig, wobei es sich bei der Fluidkühlung vorzugsweise um eine Sprühtluidkühlung handelt. In der Maschine befindet sich dann immer nur im wesentlichen soviel Kühlfluid, wie momentan zur Abfuhr der Verlustleistung benötigt wird.

Quantitativ läßt sich die Kompaktheit durch die Größe "Drehmomentdichte" ausdrücken. Vorzugsweise weist die elektrische Maschine eine hohe Drehmomentdichte - bezogen auf das maximale Drehmoment - auf, die besonders vorzugsweise größer als 0,01 Nm/cm³ ist.

An einer Antriebswelle können oft auch Radialschwingungen auftreten. Um robust gegenüber solchen Schwingungen zu sein, ist das System vorzugsweise so ausgebildet, daß die elektrische Maschine stark im Bereich magnetischer Sättigung arbeitet. Ein Maß für die magnetische Sättigung ist der Strombelag (bei maximalen Drehmoment) im Ständer pro cm Luftspaltlänge in Umfangsrichtung. Vorzugsweise beträgt dieses Maß wenigstens 400 - 1000 A/cm, besonders vorzugsweise wenigstens 500 A/cm. Das Arbeiten stark im Sättigungsbereich erlaubt es, die Maschine mit einem relativ weiten Luftspalt auszubilden. Änderungen des Luftspaltes - wie sie bei Radialschwingungen auftreten - wirken sich wegen des Betriebs im Sättigungsbereich kaum aus.

Eine derart kompakte aufgebaute elektrische Maschine hat im allgemeinen eine relativ geringe Induktivität. Um dennoch mit Hilfe einer getakteten Spannung einen möglichst genau sinusförmigen Strom zum Erzeugen der elektrischen Dreh- bzw. Wanderfelder zu erzielen, arbeitet der Wechselrichter vorteilhaft zumindest zeitweise mit einer hohen Taktfrequenz, insbesondere 10 kHz bis 100 kHz und höher. Diese Maßnahme ist auch vorteilhaft zur Erzielung einer hohen zeitlichen Auflösung des Systems: Beispielsweise kann man mit einer Taktfrequenz von 20 kHz eine zeitliche Auflösung im Drehmomentverhalten der elektrischen Maschine von 2 kHz erzielen, mit der man eine Drehungleichförmigkeit bei 200 Hz wirksam verringern kann (200 Hz entsprechen zum Beispiel der vierten Ordnung bei 3000 U/min). Eine hohe Taktfrequenz hat ferner auch den Vorteil, eine kompakte Bauweise des Wechselrichters selbst zu erlauben, denn beispielsweise können Zwischenkreiskondensatoren kleinerer Kapazität gewählt werden.

Als weitere vorteilhafte Maßnahme zur Erzielung einer kompakten Bauweise des Wechselrichters sind elektronische Schalter des Wechselrichters flüssigkeitsgekühlt, vorzugsweise siedebadgekühlt. Als Siedebad-Kühlmittel kann beispielsweise ein Fluorkohlenwasserstoff verwendet werden. Bei der Siedebadkühlung verdampft das Kühlmittel an Wärmepunkten und entzieht ihnen dadurch seine relativ hohe Verdampfungswärme. Der Dampf steigt auf und kann z.B. in einem externen Kühler kondensieren und dabei seine Verdampfungswärme abgeben. Diese Kühltechnik erlaubt kompakteste Anordnung der elektronischen Schalter des Wechselrichters ohne jegliche Kühlkörper, wobei zur Erreichung auch hoher Kühlleistung relativ geringe Temperaturdifferenzen (z.B. 2-10° C) ausreichen. Eine weitere kühltechnisch vorteilhafte Maßnahme besteht darin, mehrere elektronische Schalter des Wechselrichters, insbesondere 2 bis 20 und mehr, parallel zu schalten. Die Parallelschaltung führt zu einer verteilten Anordnung der Wärmequellen und damit einer relativ geringen Verlustleistungsdichte.

Der Wechselrichter umfaßt vorteilhaft als Schalter Halbleiterschalter, vorzugsweise schnelle Halbleiterschalter, wie Feldeffekttransistoren - besonders vorzugsweise Metalloxidhalbleiter(MOS) -Feldeffekttransistoren, bipolare Transistoren und/oder bipolare Transistoren mit isoliertem Gateanschluß (IGBTs). Unter "schnellen" Halbleiterschaltern werden insbesondere solche verstanden, die maximale Taktfrequenzen von 10 bis 100 kHz oder mehr erlauben. Der Wechselrichter ist vorteilhaft ein Pulswechselrichter, d.h. er erzeugt die für die magnetischen Felder der elektrischen Maschine benötigten Spannungen und/oder Ströme durch Pulse, insbesondere auf der Grundlage von Pulsweiten- oder Pulsamplitudenmodulation, aufgrund der Maschineninduktivität in nahezu sinusförmige Ströme beliebig einstellbarer Frequenz, Amplitude und/oder Phase verwandelt werden.

Zur optimalen Ausnutzung des z.B. in einem Kraftfahrzeug zur Verfügung stehenden Bauraumes ist es vorteilhaft, daß in die elektrische Maschine, und zwar insbesondere in deren Läufer, eine mechanische Kupplung, z.B. eine kraftschlüssige Überbrückungskupplung oder eine reibschlüssige Anfahrküpplung integriert ist. Beispielsweise bei einer Asynchron- und Synchronmaschine mit innenliegendem Läufer kann der Läufer in seinem inneren Bereich funktionslos sein und so zur Aufnahme der Kupplung hohl ausgebildet sein. Durch diese Maßnahme ist es möglich, daß die elektrische Maschine samt integrierter mechanischer Kupplung in Axialrichtung nur so viel wie oder kaum mehr Raum in Anspruch nimmt als bei einem herkömmlichen Kraftfahrzeug die Anfahrkupplung alleine benötigt. Im fall einer integrierten Anfahrkupplung ist aufgrund des reduzierten verfügbaren Durchmessers und zur Minimierung des Massenträgheitsmomentes ist eine Ausführung als Mehrscheiben- und/oder Lamellenkupplung bevorzugt. Ist die integrierte Kupplung als Naßkupplung ausgebildet, kann das Kupplungsfluid auch für die Kühlung der elektrischen Maschine sorgen. Die Betätigung der Kupplung kann mechanisch, elektrisch, magnetisch, elektromagnetisch, hydraulisch, pneumatisch oder mit Mischformen hiervon erfolgen.

Um bei dem System zu jedem Zeitpunkt die momentane absolute oder relative Winkellage der Welle oder Wellen zu kennen, ist die elektrische Maschine oder die Welle vorteilhaft mit einem oder mehreren Läuferlage- bzw. Wellenlage-Gebern ausgerüstet. Zur Gewinnung einer möglichst genauen Winkellage-Information kann insbesondere ein Drehtransformator (ein sog. Resolver) dienen, also ein Transformator mit winkelabhängigem Übertragungsverhältnis. Auch hochauflösende Kodierer sind für diesen Zweck einsetzbar, z.B. eine Kombination aus einem hochauflösenden Inkrementalgeber und einem einfachen Absolutgeber.

Bei einer vorteilhaften Ausgestaltung dient die elektrische Maschine auch einer Antriebsschlupfregelung. Und zwar ist sie derart ausgelegt, daß mit ihr eine Antriebsschlupfverringerung durch Verkleinerung des Antriebsmoments (des Antriebsaggregats) herbeiführbar ist, insbesondere durch Bremswirkung und/oder - bei als Kupplung wirkender elektrischer Maschine - durch Kupplungsschlupf-Wirkung.

Die Antriebsschlupfverringerung wird im allgemeinen erst aktiv, wenn eine bestimmte Bedingung, etwa das Überschreiten eines Grenzwertes des Antriebsschlupfes oder eines Grenzwertes der zeitlichen Änderung des Antriebsschlupfes oder eine Kombination solcher Bedingungen erfüllt ist.

Die Erfindung ist auch auf Verfahren zum Betreiben eines Antriebssystem für ein Kraftfahrzeug, gerichtet.

Das Verfahren kann vorteilhaft mit einem Antriebssystem nach einer oder mehreren der oben erläuterten Ausgestaltungen durchgeführt werden. Bezüglich einzelner Merkmale und Vorteile des Verfahrens wird auf die obigen Erläuterungen zum System verwiesen, die sich vollinhaltlich auch auf das Verfahren in seinen verschiedenen Ausgestaltungen beziehen.

Im übrigen werden in der gesamten vorliegenden Beschreibung Zahlenangaben "x" im Sinn von "wenigstens x", und nur vorzugsweise im Sinn von "genau x" verstanden.

Die Erfindung wird nun anhand von Ausführungsbeispielen und der angefügten schematischen Zeichnung näher erläutert. In der Zeichnung zeigen:
- Fig. 1: eine schematische Darstellung einer elektrischen Doppelmaschine;
- Fig. 2: eine Darstellung einer Doppelmaschine gemäß Fig.1 mit gemeinsamem Ständerkörper;
- Fig. 3: eine schematische Darstellung einer elektrischen Maschine mit drehbaren elektromagnetischen Wirkeinheiten;
- Fig. 4: eine schematische Darstellung einer anderen elektrischen Maschine mit drehbaren elektromagnetischen Wirkeinheiten;
- Fig. 5: eine schematische Darstellung einer weiteren elektrischen Maschine mit relativ drehbaren elek tromagnetischen Wirkeinheiten und einer festste henden Wirkeinheit;
- Fig. 6: eine schematische beispielhafte Darstellung der Funktionsweise des Systems zur aktiven Verringerung von Drehungleichförmigkeiten;
- Fig. 7: eine unmaßstäblich-schematische Darstellung einer Ausführungsform des Antriebssystems;
- Fig. 8: eine schematische Schnittdarstellung einer elektrischen Maschine mit Schnittebene senkrecht zur Axialrichtung zur Veranschaulichung verschiedener bei dem System verwendbaren Maschinentypen;
- Fig. 9: eine schematische Schnittdarstellung einer elektrischen Maschine mit integrierter Reibkupplung mit Schnittebene in Axialrichtung;
- Fig. 10: einen schematischen Schaltplan eines bei dem System verwendeten Wechselrichters.

In den Figuren tragen im wesentlichen funktionsgleiche Teile gleiche Bezugszeichen.

Eine elektrische Doppelmaschine 4 gemäß Fig. 1, welche die Funktion einer elektromagnetischen Kupplung und/oder Synchronisiereinrichtung hat, sitzt in einen Antriebsstrang 2 zwischen einer Antriebswelle, z.B. der Triebwelle 10 eines Verbrennungsmotors 1 (oder einer damit gekoppelten Welle), und einer Abtriebswelle, z.B. einer mit einem Getriebe 6 gekoppelten Getriebewelle 55. Sie umfaßt zwei elektrische Maschinen 4a, 4b mit jeweils einen drehfesten Ständer 8a, 8b und jeweils einem mit der An- bzw. Abtriebswelle drehenden Läufer 9a, 9b, und liegt daher nicht im Rahmen der Erfindung nach den unabhängigen Patentansprüchen. Die Läufer 9a, 9b - und damit die Anund Abtriebswelle - sind mit Hilfe einer mechanischen Überbrückungs-Kupplung 60 - hier einer form- oder reibschlüssigen Kupplung - fest mechanisch miteinander verbindbar. Diese ist vorzugsweise in gesteuerter Weise betätigbar, z.B. mechanisch, elektrisch, hydraulisch oder pneumatisch.

Fig. 2 zeigt eine Fig. 1 entsprechende (nicht im Rahmen der Erfindung liegende) Doppelmaschine 4, bei der die Läufer 9a, 9b in koaxialer Anordnung in einem gemeinsamen Ständerkörper 59 angeordnet sind, der die beiden (elektrisch getrennten oder trennbaren) Ständer 8a, 8b aufnimmt und drehtest z.B. an einem Kurbelgehäuse 61 des Verbrennungsmotors 1 befestigt ist. Die (hier nicht dargestellte) Überbrückungskupplung kann z.B. dadurch realisiert sein, daß die Läufer 9a, 9b durch Axialverschiebung miteinander in Form- oder Reibschluß gebracht werden können.

Alternativ kann sie durch z.B. durch eine in die Läufer 9a, 9b integrierte Reib- oder Klauenkupplung gebildet sein.

Die Doppelmaschine 4 der Fig. 1 und 2 hat neben ihrer Funktion als elektromagnetische Kupplung die Funktionen einer aktiven Getriebe-Synchronisiereinrichtung, eines aktiven Drehungleichförmigkeits-Verringerers, eines Direkt-Starters für den Verbrennungsmotor, eines Generators zur Versorgung von Verbrauchern mit elektrischer Energie, und eines Boosters zur Unterstützung des Verbrennungsmotors 1 beim Beschleunigen etwa eines Kraftfahrzeugs sowie einer generatorischen Bremse zur Unterstützung von Fahrzeugbremsen. Die elektrische Maschine 4 arbeitet auch im Rahmen einer - durch Regelung des Kupplungsschlupfes in der elektrischen Maschine erzielbaren - ASR zur Antriebsradschlupf-Verringerung.

Bei der Kupplungsfunktion handelt es sich bei einer Ausführungsform um die Funktion einer Anfahr- und Schaltkupp lung, bei einer anderen Ausführungsform nur um die einer Schaltkupplung zum Gangwechsel. Bei der ersten Ausführungsform kann die beim Kraftfahrzeug im Antriebsstrang vorhandene herkömmliche mechanische oder hydrodynamische Kupplung entfallen. Bei der zweiten Ausführungsform ist sie hingegen als Anfahrkupplung zusätzlich zur elektromagnetischen Kupplung 4 vorhanden. Sie ist z.B. nachfolgend in der Abtriebswelle 55 angeordnet und kann nach dem Anfahren - also auch während eines Gangwechsels - geschlossen bleiben.

Bei beiden Ausführungsformen wird die Überbrückungskupplung 60 bei Gleichlauf der Wellen 10, 55 geschlossen, um dann die elektromagnetischen Kopplungsverluste zu elimineren, bei der zweiten Ausführungsform auch um das hohe Anfahrmoment zu übertragen, sowie bei anderen Funktionen, wie dem Drehungleichförmigkeits-Verringern und Starten, durch gekoppelten Parallellauf beider Maschinen 4a, 4b größere Drehmomente zur Verfügung zu haben. Da die Überbrückungskupplung 60 nur bei Wellengleichlauf eingekuppelt wird, ist sie vorteilhaft als formschlüssige Kupplung (z.B. Hakenkupplung) ausgebildet.

Bei einer dritten Ausführungsform hat die elektrische Doppelmaschine 4 keine Kupplungsfunktion, dient aber (wie bei der ersten und zweiten Ausführungsform) der aktiven Getriebesynchronisaton durch Beschleunigen bzw. Abbremsen der Abtriebswelle 55 in dem Zeitraum zwischen Wellentrennung und -verbindung, die durch eine als mechanische oder hydrodynamische Anfahr- und Schaltkupplung, z.B. in Form einer reibschlüssig ausgebildeten Überbrückungskupplung 60 bewirkt wird.

Die elektrische Ansteuerung der Maschinen 4a, 4b erfolgt bei den Ausführungsformen mit Kupplungsfunktion unabhängig voneinander, hier durch zwei im wesentlichen unabhängige Wechselrichter, um die Erzeugung entgegengesetzter Drehmomente (z.B. wenn die antriebsseitige Maschine 4a als Generator und die abtriebsseitige 4b als Motor arbeitet) und/oder von Drehmomenten bei verschiedenen Drehzahlen (z.B. während des Anfahrens und nach Gangwechsel) zu ermöglichen. Bei der Ausführungsform ohne elektromagnetischen Kupplungs-Funktion ist keine unabhängige Ansteuerung erforderlich. Hier genügt ein Wechselrichter, der zur Steuerung der verschiedenen Funktion (Synchronisierung, Drehungleichförmigkeits-Verringerung, Starten, Stromerzeugung, Beschleunigung, Bremsung) geeignet ist und wahlweise mit nur einer Maschine 4a oder 4b oder beiden Maschinen 4a, 4b koppelbar ist. Die wahlweise Koppelbarkeit erlaubt einerseits für manche Funktionen - etwa zum Starten - beide Maschinen 4a, 4b gemeinsam (bei geschlossener Überbrückungskupplung 60) Moment erzeugen zu lassen, und andererseits für andere Funktionen nur eine von ihnen (bei geöffneter Überbrückungskupplung 60) Moment erzeugen zu lassen - etwa die abtriebsseitige Maschine 4b ein bremsendes Moment zur Synchronisierung oder zum Abbremsen des Fahrzeugs erzeugen zu lassen. Elektrische Energie, die durch generatorisches Bremsen und Kupplungsschlupf anfällt, wird gespeichert, z.B. einem elektrischen (z.B. Kondensator), elektrochemischen (z.B. Batterie) oder einen kinetomechanischen Speicher (z.B. Schwungrad-Speicher), und wiederverwendet. Falls die anfallende Energie oder Leistung das Aufnahmevermögen des Speichers übertrifft - was z.B. bei der Anfahrkupplungsfunktion der Fall sein kann, wird die Überschußenergie in Form von Wärme über Heizwiderstände abgeführt.

Eine elektrische Einzelmaschine 4 gemäß Fig. 3, welche die Funktion einer elektromagnetischen Kupplung und/oder Synchronisiereinrichtung hat, weist ein inneres und ein äußeres elektromagnetisches Wirkelement auf, die in Anlehnung an bei elektrischen Maschinen üblichen Bezeichnungsweisen Läufer 9 und Ständer 8' genannt werden. Der Läufer 9 ist drehfest mit der Abtriebswelle 55 und der Ständer 8' ist drehfest mit der Triebwelle 10 verbunden (bei anderen - nicht gezeigten - Ausführungsformen ist diese Zuordnung umgekehrt). Die elektrische Maschine 4 ist also zusätzlich zur Läuferdrehung als Ganzes drehbar; der Begriff "Ständer" ist also angesichts dessen Drehbarkeit nur in einem übertragenen Sinn zu verstehen. Während es bei einer feststehenden elektrischen Maschine - z.B. einer Drehfeld-Maschine - möglich ist, die Stromzufuhr auf das feststehende Wirkelement (d.h. den Ständer) zu beschränken und in drehbaren Wirkelement (d.h. im Läufer) Ströme ohne Stromzufuhr nur durch Induktion hervorzurufen, wird hier - wo beide Wirkelemente drehbar sind - wenigstens einem von ihnen (hier dem Ständer 8') Strom über drehbewegliche elektrische Verbindungen (z.B. über hier nicht gezeigte Schleifer/Schleifring-Kontakte) zugeführt. Die Abtriebswelle 55 ist mit einer mechanischen Kupplung, hier einer gegen das Fahrzeugchassis oder das Getriebegehäuse abgestützten Bremse 62 gegen Drehung festlegbar. Die gezeigte Ausführungsform hat keine Überbrückungskupplung und liegt dehar nicht im Rahmen der Erfindung nach Anspruch 1, andere (nicht gezeigte) Ausführungsformen sind jedoch mit einer reib- oder kraftschlüssigen Überbrückungskupplung zur mechanischen Verbindung der Wellen 10, 55 ausgerüstet. Die Maschine 4 kann im oder am Motorgehäuse, Getriebegehäuse oder an beliebiger anderer Stelle im Antriebsstrang 2 plaziert sein.

Die elektrische Einzelmaschine 4 kann - trotz ihres einfachen Aufbaus - im wesentlichen alle Funktionen der Doppelmaschine gemäß Fig. 1 und 2 ausführen, so daß die dort gemachten Ausführungen - soweit sinnvoll - auch hier Gültigkeit haben.

In der Funktion als Schaltkupplung und ggf. als Anfahrkupplung wird ein Gleichlauf der Wellen 10, 55 durch eine solche Einstellung der drehmomenterzeugenden magnetischen Felder der Maschine 4 erzielt, daß Drehzahlgleichheit zwischen den Wellen 10 und 55 herrscht, also der Kupplungsschlupf zwischen Ständer 8' und Läufer 9 genau verschwindet. Bei einer Asynchronmaschine wird dies beispielsweise durch die Regelung bzw. Steuerung des magnetischen Schlupfes eines entgegen der Antriebsdrehmoment-Richtung relativ zum Ständer 8' umlaufenden Drehfelds geeigneter Frequenz und Amplitude erzielt. Eine (hier nicht dargestellte) formschlüssige Überbrückungskupplung eliminiert bei verschwindendem Kupplungsschlupf die elektromagnetischen Verluste.

Die aktive Getriebesynchronisierung - die bei Ausführungs formen der Einzelmaschine 4 auch ohne Kupplungsfunktion realisiert sein kann - erfolgt hier in Abstützung gegen die mit der variablen Drehzahl des Verbrennungsmotors 1 drehende Triebwelle 10. Der Beitrag dieser, Drehung wird bei der Bestimmung und Steuerung der für die jeweilige Synchronisation nötigen Relativdrehzahl der Maschine 4 berücksichtigt.

Eine Verringerung von Drehungleichförmigkeiten der Triebwelle 10 kann im Stand des Fahrzeugs in Abstützung gegen den dann mit Hilfe der Bremse 62 gegen Drehung festgelegten Läufer 9 erfolgen. Bei angetriebener Fahrt können bei nicht eingekuppelter (oder nicht vorhandener) Überbrückungskupplung Drehungleichförmigkeiten der Triebwelle 10 von der Abtriebswelle 55 durch schnelles Variieren des übertragenen Drehmoments isoliert werden, und zwar durch dessen verkleinerung (d.h. durch eine Vergrößerung des Kupplungsschlupfes) bei positiver Drehungleichförmigkeit und dessen Vergrößerung (d.h. durch eine Verkleinerung des Kupplungsschlupfes) bei negativer.

Zusatzbeschleunigung oder -bremsung ist bei nicht eingekuppelter Überbrückungskupplung durch Erzeugung entsprechenden Drehmomente - oder anders ausgedrückt - kleineren oder größeren Kupplungsschlupfes möglich. Die elektrische Maschine 4 kann in eine ASR-Regelung derart einbezogen sein, daß bei zu großem Antriebsrad-Schlupf der Kupplungsschlupf augenblicklich vergrößert und damit das an den Antriebsrädern anliegende Moment verkleinert wird. Eine Generatorfunktion zur Stromerzeugung wird durch dauernd aufrechterhaltenen Kupplungsschlupf erzielt.

Die elektrische Maschine 4 kann den Verbrennungsmotors 1 direkt in Abstützung gegen die durch die Bremse 62 festgelegte Abtriebswelle 55 starten. Bei einer anderen Ausführungsform, bei der die Maschine 4 hierfür kein ausreichendes Drehmoment aufbringt, kann sie unter Ausnutzung der elektromagnetischen Kupplungsfunktion als verschleißfreier Schwungradstarter dienen. Hierzu beschleunigt die elektrische Maschine 4 zunächst bei nicht eingelegtem Gang und gelöster Bremse 62 den dann freilaufenden Läufer 9 zusammen mit der Abtriebswelle 55 in Abstützung gegen die Triebwelle 10 und die Kompression des noch nicht laufenden Verbrennungsmotors 1 auf eine relativ hohe Drehzahl, z.B. auf 2000 U/min. Dann wird die elektrische Maschine 4 innerhalb kurzer Zeit so umgesteuert, daß sie ein bremsendes Moment, also Kraftschluß zwischen dem Läufer 9 und dem Ständer 8' herstellt. Dadurch werden der Läufer 9 mit der Abtriebswelle 55 und der Ständer 8' mit der Triebwelle 10 schnell auf eine gemeinsame mittlere Drehzahl (z.B. 800 U/min) gebracht und der Verbrennungsmotor 1 gestartet.

Fig. 4 zeigt eine Weiterbildung der elektrischen Maschine mit drehbaren Wirkeinheiten gemäß Fig. 3. Die dort sowie im Zusammenhang mit Fig. 1 und 2 gemachten Ausführungen haben auch hier - soweit sinnvoll - Gültigkeit. Die Maschine 4 gemäß Fig. 4 hat bei etwas größerem Aufwand den Vorteil, auch im Antriebszustand des Antriebssystems eine Verringerung von Drehungleichförmigkeiten an ihrem Ursprung - also an der Triebwelle 10, und nicht nur an der Abtriebswelle 55 - zu erlauben, ferner die Generatorfunktion bei geschlossener Überbrückungskupplung - und damit bei höherem Wirkungsgrad - bereitzustellen, sowie die Synchronisierung bezüglich eines feststehenden - und nicht mit variabler Drehzahl rotierenden - Bezugselements zu ermöglichen, was deren Steuerung vereinfacht.

Dies wird dadurch erreicht, daß der Ständer 8' nicht mehr dauernd mit der Triebwelle 10 gekoppelt ist, sondern in steuerbarer Weise drei verschiedene Kopplungszustände einnehmen kann:
1. mit der Triebwelle 10 gekoppelt (wie in Fig. 3);
2. ohne Kopplung mit der Triebwelle 10 frei drehbar;
3. gegen Drehung festgelegt.

Zwei zusätzliche mechanische Kupplungen, bei denen es sich um reibschlüssige, vorzugsweise aber um formschlüssige Kupplungen handeln kann, dienen hierzu: Eine Motorkupplung 63, die im geschlossenen Zustand den Ständer 8' mit der Triebwelle 10 koppelt (Kopplungszustand 1), und eine Festleg-Kupplung 64, die ihn im geschlossenen Zustand gegen Drehung festlegt, z.B. durch Kopplung mit dem Kurbelgehäuse 61 (Kopplungszustand 3). Für den Kopplungszustand 2 sind beide geöffnet; ein gleichzeitiges Schließen ist ein verbotener Zustand. Die Kupplungen 63, 64 (die in Fig. 4 nur aus Gründen der Rotationsymmetrie doppelt gezeichnet sind), sowie die Überbrückungskupplung 60 sind in gesteuerter Weise betätigbar, z.B. mechanisch, elektrisch, hydraulisch oder pneumatisch.

Die Steuerung der elektrischen Maschine 4 und der Kupplungen 60, 62, 63 erfolgt durch die verschiedenen Betriebszustände und Funktionen des Antriebssystems gemäß folgenden Verfahrensabläufen:
1. Starten des Verbrennungsmotors 1 (Schwungrad-Start):
   i. Gang freischalten (z.B. durch Bedienungsperson);
   ii. Motorkupplung 63 wird geschlossen;
   iii. Läufer 9 wird durch elektrische Maschine 4 auf hohe Drehzahl beschleunigt;
   iv. Bremsmoment in elektrischer Maschine 4 wird eingeschaltet, dadurch wird Läufer 9 abgebremst und Ständer 8' beschleunigt, so daß der Verbrennungsmotor 1 startet;
2. Anfahren des Fahrzeugs:
   i. Überbrückungskupplung 60 wird geöffnet;
   ii. Läufer 9 wird durch elektrische Maschine 4 zum Stillstand gebracht;
   iii. 1. Gang wird eingelegt (z.B. durch Bedienungsperson);
   iv. Läufer 9 wird elektromagnetisch mit Anfahr-Nennmoment beschleunigt, d.h. durch Ständer 8' mitgenommen;
   v. bei Gleichlauf wird Überbrückungskupplung 60 geschlossen;
3. Stationärer Fahrbetrieb mit Drehungleichförmigkeits-Verringerung:
   i. Motorkupplung 63 wird geöffnet, so daß der Ständer 8' frei dreht;
   ii. Ständer 8' wird durch elektrische Maschine 4 zum Stillstand gebracht;
   iii. Festleg-Kupplung 64 wird geschlossen, so daß eine starre Verbindung zwischen Ständer 8' und dem Kurbelgehäuse des Verbrennungsmotors 1 herrscht;
   iv. Wechselmoment zur Verringerung von Drehungleichförmigkeiten der Triebwelle 10 wird von der elektrischen Maschine 4 erzeugt;
4. Schalten:
   i. Verbrennungsmotor-Antriebsmoment wird weggenommen (ggf. mit Unterstützung der elektrischen Maschine) (z.B. durch Bedienungsperson);
   ii. Überbrückungskupplung 60 wird geöffnet;
   iii. Gang wird herausgenommen (z.B. durch Bedienungsperson);
   iv. Läufer 9 wird auf diejenige neue Drehzahl beschleunigt oder abgebremst, welche die Synchronisierbedingung für den neu einzulegenden Gang erfüllt;
   v. dieser Gang wird eingelegt (z.B. durch Bedienungsperson);
   vi. Überbrückungskupplung 60 wird geschlossen;
   vii. Verbrennungsmotor-Antriebsmoment wird wieder freigegeben (z.B. durch Bedienungsperson).

   Eine Drehungleichförmigkeits-Verringerung ist auch im Leerlauf möglich, wie folgende Verfahrensabfolge zeigt, die sich an den obigen Schritt 1 anschließen kann:
5. Leerlauf mit Drehungleichförmigkeits-Verringerung:
   i. Motorkupplung 63 wird geöffnet, so daß der Ständer 8' frei dreht;
   ii. Ständer 8' wird durch elektrische Maschine 4 zum Stillstand gebracht;
   iii. Festleg-Kupplung 64 wird geschlossen, so daß eine starre Verbindung zwischen Ständer 8' und dem Kurbelgehäuse des Verbrennungsmotors 1 herrscht;
   iv. Wechselmoment zur Verringerung von Drehungleichförmigkeiten der Triebwelle 10 wird von der elektrischen Maschine 4 erzeugt.

Das Schließen der Kupplungen 60, 63, 64 erfolgt nur bei jeweils verschwindender Relativdrehzahl. Die Generatorfunktion und bremsende oder antreibende Zusatz-Drehmomente werden - wie die Synchronisierungsfunktion und die Drehungleichförmigkeits-Verringerung - bei geschlossener Überbrückungskupplung 60 und geschlossener Festleg-Kupplung 64 durch entsprechende bremsende bzw. antreibende Momente der elektrischen Maschine 4 verwirklicht.

Andere Ausführungsformen starten den Verbrennungsmotor 1 direkt, und zwar bei geschlossener Überbrückungskupplung 60 und geschlossener Festleg-Kupplung 64.

Die elektrische Maschine 4 gemäß Fig. 5 entspricht funktionell weitgehend der in Fig. 4 gezeigten, so daß die Ausführungen zu Fig. 4 sowie 1 bis 3 auch hier - soweit sie nicht im folgenden genannte Abweichungen betreffen - Geltung haben. Ein wesentlicher Unterschied zur Maschine gemäß Fig. 4 besteht darin, daß die Umschaltung von "drehbarem Ständer" auf "feststehenden Ständer" nicht mechanisch durch Öffnen und Schließen von Kupplungen, sondern auf elektrischem Wege erfolgt. Ein weiterer Unterschied besteht darin, daß bei der gezeigten Maschine 4 die Rollen der Triebwelle 10 und der Abtriebswelle 55 gegenüber Fig. 4 vertauscht sind, was zu geringfügigen - unten näher erläuterten - Abweichungen in der Funktionsweise führt. Bei (nicht gezeigten) Ausführungsformen entsprechen die Rollen der Triebwelle 10 und der Abtriebswelle 55 jedoch denen von Fig. 4; diese Ausführungsformen zeigen nicht diese Abweichungen.

Bei der gezeigten elektrischen Maschine 4 sind - wie gesagt - der (außenliegende) Ständer 8' und der (innenliegende) Läufer 9 drehtest und nicht entkoppelbar mit der Abtriebswelle 55 bzw. der Triebwelle 10 verbunden. Zusätzlich zum drehbaren Ständer 8' ist die Maschine 4 mit einem gegen Drehung festliegenden Ständer 8 ausgerüstet, der sich (z.B.) gegen das Kurbelgehäuse 61 abstützt. Dieser ist dem drehbaren Ständer 8' unmittelbar benachbart, und zwar in Axialrichtung (z.B.) zum Verbrennungsmotor 1 hin versetzt. Er ist koaxial zum drehbaren Ständer 8' angeordnet und weist einen Innendurchmesser wie jener auf. Die Wicklungen der beiden Ständer 8', 8 sind eigenständig, so daß sie in ihrer Magnetfelderzeugung entkoppelt oder entkoppelbar sind. Der Läufer 9 ist so breit ausgebildet, daß er sich in Axialrichtung im wesentlichen über die Wirkflächen der beiden Ständer 8', 8 erstreckt. Eine Überbrückungskupplung 60 koppelt - wie in Fig. 4 - die Triebwelle 10 mit der Abtriebswelle 50. Bei anderen (nicht gezeigten) Ausführungsformen sind der Läufer 9 außen- und die Ständer 8', 8 innenliegend.

Das Umschalten zwischen dem festliegenden Ständer 8 und dem drehbaren Ständer 8' erfolgt mit Hilfe einer umschaltbaren Versorgungseinheit, hier eines geeignet umschaltbaren Wechselrichters. Dieser versorgt entweder für die Funktionen Direktstart, Drehungleichförmigkeits-Verringerung, Fahrzeugbremsung und -beschleunigung sowie die Generatorfunktion den festgelegten Ständer 8 oder für die Funktionen elektromagnetische Kupplung, Synchronisierung sowie Schwungrad-Start den drehbaren Ständer 8' mit den hierfür jeweils erforderlichen Strömen und Spannungen, wobei er zwischen diesen trägheitslos und ohne merkliche Zeitverzögerung umschalten kann.

Anders als in Fig. 4 wird die Funktion "Synchronisierung" durch Momenterzeugung zwischen dem drehbaren Ständer 8' und dem Läufer 9 gesteuert, was steuerungstechnisch wegen der Abstützung gegen die drehzahlvariable Triebwelle 10 aufwendiger ist. Dies liegt daran, daß bei der Maschine 4 gemäß Fig. 5 die Überbrückungskupplung 60 in Abtriebsrichtung gesehen hinter der durch den festliegenden Ständer 8 und den Läufer 9 gebildeten elektrischen Maschine liegt, während sie bei der Maschine 4 gemäß Fig. 4 bei festliegendem Ständer vor der elektrischen Maschine liegt. Bei der (nicht gezeigten) Ausführungstorm, bei der die Rollen der Triebwelle 10 und der Abtriebswelle 55 gegenüber Fig. 5 vertauscht sind, ist dieser funktionelle Unterschied zu Fig. 4 nicht vorhanden.

Bei anderen Ausführungsformen werden die beiden Ständer 8, 8' simultan und unabhängig mit Hilfe zweier unabhängiger Versorgungseinrichtungen, hier Wechselrichter gespeist. Dies ermöglicht eine Ausführung von dem festliegenden Ständer 8 zugeordneten Funktionen, z.B. der Generatorfunktion und der Drehungleichförmigkeits-Verringerung auch während der Ausführung von dem drehbaren Ständer 8' zugeordneten Funktionen, z.B. der elektromagnetischen Kupplungstunktion.

Eine weitere (nicht gezeigte) Ausführungsform der elektrischen Maschine mit einem Läufer, einem permanent testliegenden Ständer und einer mechanischen Kupplung zwischen dem Antriebsaggregat und der elektrischen Maschine erlaubt eine aktive Getriebesynchronisierung, stellt jedoch keine elektromagnetische Kupplungstunktion bereit.

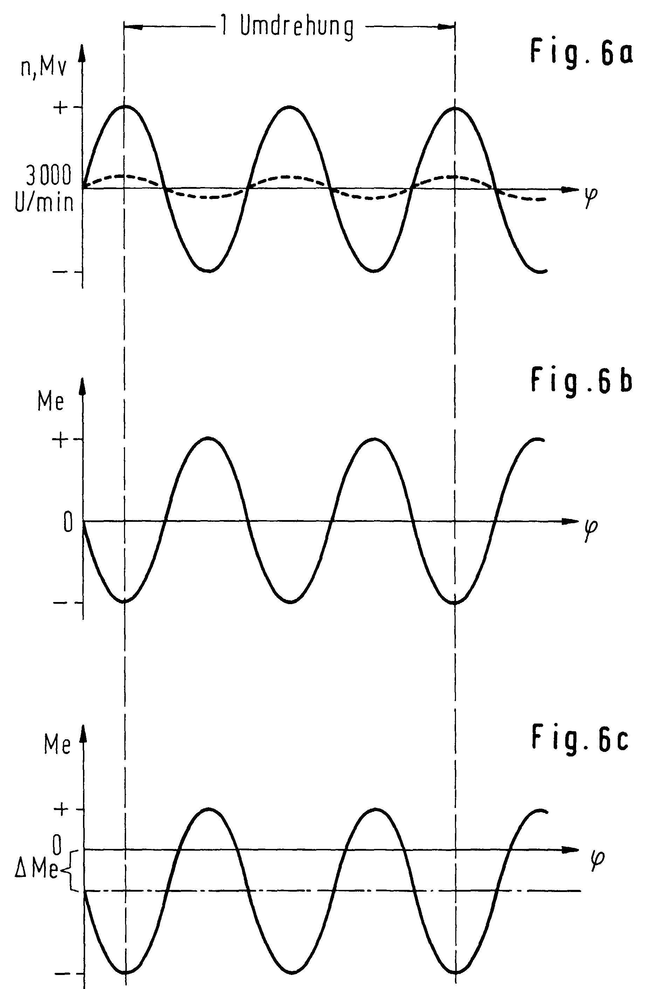

Die Fig. 6a - c veranschaulichen die Funktion der Drehungleichförmigkeitsverringerung und die Überlagerung von Wechsel- und Gleich-Drehmoment.

Fig. 6a zeigt (mit durchgezogener Linie) die Drehzahl n einer Welle als Funktion des Kurbelwellenwinkels ϕ. Die Welle führt um eine mittlere Drehzahl (hier 3000 Umdrehungen pro Minute) periodisch Drehzahlschwankungen zu kleine ren und größeren Drehzahlen hin aus, welche in diesem idealisierten Beispiel insgesamt einen im wesentlichen sinusförmigen Verlauf haben. Bei der Welle handelt es sich beispielsweise um die Kurbelwelle eines Vierzylinder-Viertakt-Verbrennungsmotors eines Kraftfahrzeugs, die in der zweiten Ordnung (d.h. bei einer Frequenz von 100 Hz) eine relativ große, von den Gas- und Massenkräften herrührende Drehungleichförmigkeit aufweist. Zur Veranschaulichung ist auch das für eine Umdrehung der Welle benötigte Winkelintervall eingezeichnet. Im allgemeinen treten bei einer Welle außerdem (hier nicht dargestellte) Drehungleichförmigkeiten höherer Ordnungen und solche stochastischer Natur auf. Ihr Verlauf ist also i.a. nicht sinusförmig.

Im wesentlichen proportional zu den Drehungleichförmigkeiten sind Schwankungen des Drehmoments Mv des Verbrennungsmotors um ein mittleres Drehmoment. Die durchgezogene Linie in Fig. 6a veranschaulicht damit auch den Verlauf des Motor-Drehmoments Mv als Funktion des Kurbelwellenwinkels ϕ.

Fig. 6b veranschaulicht das Gesamt-Drehmoment Me als Funktion des Wellenwinkels ϕ, das von einer mit der Welle gekoppelten elektrischen Maschine mit festliegendem Ständer aufgebracht wird. Der Verlauf des Maschinendrehmoments Me entspricht weitgehend dem der Drehungleichförmigkeit und des Motor-Drehmoments Mv, ist jedoch entgegengesetzt gerichtet. D.h., bei einer Drehungleichförmigkeit zu höheren Drehzahlen hin (sog. positive Drehungleichförmigkeit) erzeugt die elektrische Maschine ein die Welle bremsendes Drehmoment (sog. negatives Drehmoment), wohingegen sie bei einer Drehungleichförmigkeit zu niederen Drehzahlen hin (sog. negative Drehungleichförmigkeit) ein antreibendes Drehmoment (sog. positives Drehmoment) erzeugt. Der Betrag des Drehmoments Me ist so gewählt, daß die Drehungleichförmigkeit - und die zu ihr proportionale Schwankung des Drehmoments Mv - durch dessen Wirkung wesentlich verringert wird oder sogar praktisch verschwindet, wie in Fig. 6a durch die gestrichelte Linie veranschaulicht ist.

Bei der in Fig. 6b gezeigten Betriebsweise sind die negativen und positiven Drehmomentextrema betragsmäßig gleich groß. Die bei einer Bremsphase gewonnene Energie ist also im wesentlichen gleich groß wie die bei der folgenden Antriebsphase aufzuwendende Energie. Der Energiefluß nach außen ist somit Null, es wird nur im Inneren des System zeitweise Bremsenergie zwischengespeichert. Das System arbeitet also in dieser Betriebsweise als reiner Drehungleichförmigkeits-Verringerer mit schnell variierendem Drehmoment, ohne Erzeugung eines Zusatz-Drehmoments.

Ein Beispiel für eine demgegenüber modifizierte Betriebsweise des Systems mit überlagertem Gleich-Drehmoment ist in Fig. 6c gezeigt: Der zeitliche Verlauf des Gesamt-Drehmoments Me entspricht dem von Fig. 6b, es ist jedoch global um einen bestimmten Betrag ΔMe (den sog. Hub) in negative Richtung verschoben. Der Hub ΔMe wird im allgemeinen langsam variieren, in dem hier dargestellten kurzen Zeitrahmen von ungefähr einer Umdrehungsperiode ist er jedoch in guter Näherung konstant. Der Hub ΔMe ist hier kleiner als die Amplitude der schnelle Variation des Drehmoments, so daß das Gesamt-Drehmoment Me alternierend positive und negative Werte annimmt. Gemittelt über die schnelle Drehmomentvariation erhält man ein konstantes Drehmoment -ΔMe. Dem Verbrennungsmotor wird also im Mittel mechanische Energie entzogen, die weitgehend in elektrische Energie umgewandelt und dem System entnommen wird. Die elektrische Maschine hat also in dieser Betriebsart neben der Funktion als Drehungleichförmigkeits-Verringerer die Funktion eines elektrischen Generators, der Strom z.B. zum Ausgleichen der Betriebsverluste des Systems, zum Laden der Fahrzeugbatterie und/oder zum Betreiben elektrischer Verbraucher liefern kann. Entsprechende Verhältnisse liegen bei einer als Kupplung wirkenden elektrischen Maschine mit drehbarem Statur vor: Die Maschine überträgt für die Kupplungsfunktion ein nur langsam variierendes Drehmoment, dem zur Drehungleichförmigkeitsverminderung im Abtriebsbereich ein schnell variierendes Drehmoment, wie in Fig. 6a überlagert wird.

Falls der Hub ΔMe größer als die Amplitude zur Verringerung der Drehungleichförmigkeit ist, wirkt die elektrische Maschine nur noch bremsend und nicht mehr antreibend, wobei die Bremswirkung in ihrem Betrag entsprechend Fig. 6b und 6c gegenphasig zur Drehungleichförmigkeit variiert.

Allein durch eine entsprechende Einstellung der (Software-)Steuerung der elektrischen Maschine - ohne jegliche konstruktive (Hardware-)Änderungen - sind kleine und sehr große Generator- und Kupplungsleistungen einstellbar. Begrenzend wirkt nur die Größe der elektrischen Maschine. Damit kann ein und derselbe Maschinentyp beispielsweise für kleine und große Kraftfahrzeugtypen ohne konstruktive Anpassung verwendet werden.

Der globale Drehmomentverlauf kann auch in positiver Richtung verschoben sein (positiver Hub). Die elektrische Maschine arbeitet dann neben ihrer Funktion als Drehungleichförmigkeits-Verringerer als (antreibender) Motor, z.B. um ein Getriebeelement zwecks Synchronisierung zu beschleunigen oder den Verbrennungsmotor bei einer Fahrzeugbeschleunigung zu unterstützen.

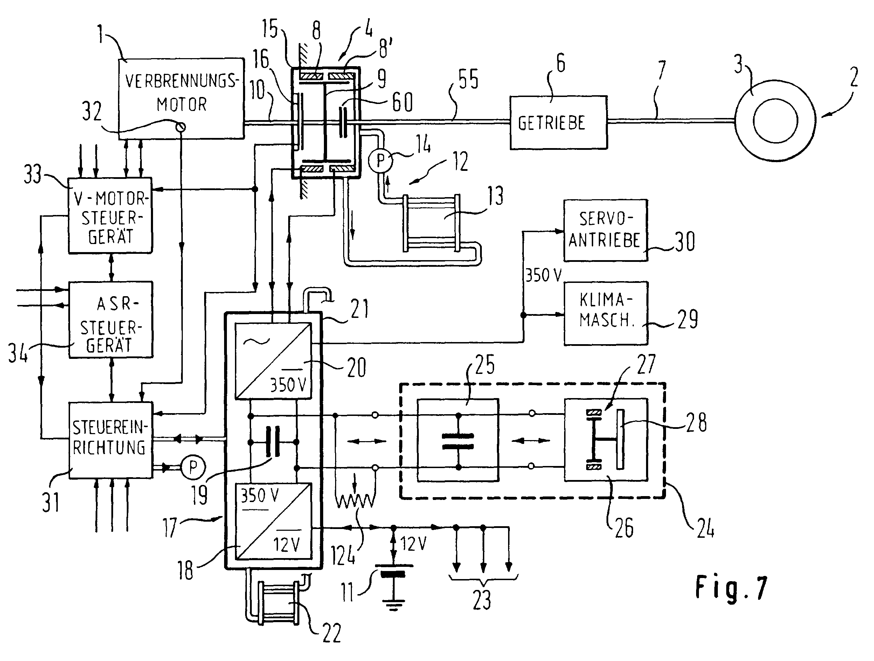

Das in Fig. 7 dargestellte Antriebssystems eines Kraftfahrzeugs, z.B. eines Personenkraftwagens, weist als Antriebsaggregat einen Verbrennungsmotor 1 auf, bei dem es sich beispielsweise um einen Vierzylinder-Viertakt-Otto- oder Dieselmotor handelt. Das vom Verbrennungsmotor 1 erzeugte Drehmoment kann über einen Antriebsstrang 2 auf Antriebsräder 3 übertragen werden. In Abtriebsrichtung ist im Antriebsstrang 2 nach dem Verbrennungsmotor 1 über eine Triebwelle 10 (hier die Kurbelwelle des Verbrennungsmotors 1) zunächst eine elektrische Maschine 4 angeordnet. Auf diese folgen über eine Abtriebswelle 55 ein Getriebe 6 und ein Achsantrieb 7, welcher das Drehmoment vom Getriebe 6 auf die Antriebsräder 3 überträgt. Bei dem Getriebe 6 kann es sich um ein Schaltgetriebe oder ein automatisches Getriebe handeln. Bei anderen (nicht gezeigten) Ausführungsformen ist im Antriebsstrang 2 zwischen Verbrennungsmotor 1 und elektrischer Maschine 4 eine weitere (durch Steuerung betätigte) Kupplung angeordnet, um beim Bremsen mit der elektrischen Maschine 4 einen Mitlaut des Verbrennungsmotors 1 zu vermeiden.

Die elektrische Maschine 4 - hier eine Drehstrom-Wanderfeld-Maschine in Asynchron- oder Synchron-Bauart - entspricht der in Fig. 5 gezeigten Maschine mit elektrisch umschaltbarem Doppelständer. Sie umfaßt zwei äußere Ständer 8, 8' und einen inneren bürstenlosen Läufer 9, der sich in Axialrichtung über die Wirkfläche beider Ständer 8, 8' erstreckt. Der erste, antriebsseitige Ständer 8 stützt sich drehfest gegen den Verbrennungsmotor 1, ein (nicht gezeigtes) Fahrzeugchassis oder ein (nicht gezeigtes) Kupplungsgehäuse ab, wohingegen der zweite, antriebsseitige Ständer 8' drehtest mit der Abtriebswelle 55 verbunden ist. Der Läufer 9 sitzt direkt auf der Triebwelle 10 oder einer Verlängerung hiervon und ist mit dieser drehtest gekoppelt. Die Triebwelle 10 und der Läufer 9 sowie die Abtriebswelle und der drehbare Ständer 8' rotieren also jeweils gemeinsam, ohne Zwischenschaltung eines Getriebes. Die Triebwelle 10 und die Abtriebswelle 55, die zwischen dem Läufer 9 und dem drehbaren Ständer 8' getrennt sind, sind mit einer im Inneren des Läufers 9 integrierten formschlüssigen Überbrückungskupplung 60, hier einer steuerbar betätigbaren Klauenkupplung koppelbar.

Die elektrische Maschine 4 erfüllt mehrere Funktionen: Sie fungiert einerseits als elektromagnetische Anfahr- und Schaltkupplung und als aktive Getriebe-Synchronisiereinrichtung, wie im Zusammenhang mit den Fig. 1 - 5 bereits erläutert wurde, und ersetzt damit eine herkömmliche Fahrkupplung und erlaubt die Verwendung eines unsynchronisierten Getriebes. Daneben dient sie als Drehungleichförmigkeits-Verringerer, wie im Zusammenhang mit Fig. 6 bereits erläutert wurde. Weiter fungiert sie als Generator zur Ladung einer Fahrzeugbatterie 11 und zur Versorgung elektrischer Verbraucher und ersetzt damit eine herkömmlicherweise im Kraftfahrzeug vorhandene Lichtmaschine. Die Generatorfunktion kann ferner zum Abbremsen des Fahrzeugs oder des Verbrennungsmotors 1 dienen. Außerdem kann die elektrische Maschine 4 als Zusatzmotor ("Booster") fungieren, z.B. um den Verbrennungsmotor beim Beschleunigen des Fahrzeugs zu unterstützen. Auch dient sie als Direkt-Starter für den Verbrennungsmotor und kann somit auch einen herkömmlicherweise beim Kraftfahrzeug gesondert vorgesehenen Starter ("Anlasser") ersetzen. Schließlich fungiert sie aufgrund des Massenträgheitsmoments des Läufers 9 als Schwungrad und kann so das bei herkömmlichen Kraftfahrzeugen i.a. vorhandene, auf der Kurbelwelle sitzende Schwungrad ersetzen.

Die elektrische Maschine 4 ist durch eine Sprühflüssigkeitskühlung 12 innengekühlt. Nach Durchlaufen eines Kühlers 13 und einer Pumpe 14 wird die Kühlflüssigkeit - hier ein geeignetes Öl - an den Läufer 9, und zwar in der Nähe von dessen Rotationsachse, gesprüht. Sie wandert aufgrund der Läuferrotation fliehkraftbedingt nach außen und kühlt dabei Läufer 9 und Ständer 8, 8', und verläßt dann ein Gehäuse 15 der elektrischen Maschine 4, um in einem geschlossenen Kreislauf wieder in den Kühler 13 einzutreten. Der Kühlmittelfluß erfolgt verlustleistungs- und drehzahlabhängig durch entsprechende Steuerung der Pumpe 14, derart, daß sich jeweils im wesentlichen nur eine gerade benötigte Mindestmenge der Kühlflüssigkeit im Inneren des Gehäuses 15 befindet. Ein (nicht gezeigtes) Ausgleichsgefäß erlaubt diese Variation der Kühlflüssigkeitsmenge im Gehäuse 15. Bei anderen (nicht gezeigten) Ausführungsformen ist die elektrische Maschine (oder nur der Läufer) in ein Kupplungs- und/oder Getriebegehäuse integriert und wird durch ein darin befindliches Schmier- und/oder Kühlfluid (z.B. Kupplungs- oder Getriebeöl) mit gekühlt.

Die elektrische Maschine 4 ist außerdem auf der Seite der Triebwelle 10 mit einem Drehtransformator 16 (sog. Resolver) ausgerüstet, der vorzugweise mehr als 8 Pole, hier z.B. 12 Pole auweist. Er besteht aus zwei benachbart angeordneten Leiterplatten, von denen eine feststeht und die andere sich mit der Triebwelle 10 dreht. Die Leiterplatten tragen auf ihren zugewandten Oberflächen durch Leiterbahnen gebildete Windungen, derart daß sich ein drehwinkelabhängiges Transformator-Übersetzungsverhältnis ergibt. Der Drehtransformator 16 arbeitet nach dem Transponder-Prinzip: Die feststehenden Windungen (festehende Platine) werden aktiv mit Strom/Spannung beaufschlagt und strahlen elektromagnetische Energie zu den drehbaren Windungen (drehbare Platine) hin ab. Letztere strahlen einen Teil dieser Energie wieder zurück, wobei dieser Teil aufgrund des drehwinkelabhängigen Übertragungsverhältnisses vom Drehwinkel abhängt. Der rückgestrahlte Teil erzeugt in den feststehenden Windungen ein drehwinkelabhängiges Signal. Eine Auswertung dieses Signals liefert den momentanen Drehwinkel der Triebwelle 10 mit einer Genauigkeit von wenigstens 0,5 Grad. Bei einfacheren Ausführungsformen wird ein Inkrementalgeber verwendet oder völlig auf einen entsprechenden Geber verzichtet.

Ein Wechselrichter 17 liefert in umschaltbarer Weise entweder dem festliegenden Ständer 8 oder dem drehbaren Ständer 8' oder beiden parallel bei einer sehr hohen Taktfrequenz (z.B. 10-100 kHz) sinusbewertete pulsweitenmodulierte Spannungsimpulse, die unter der Wirkung der Maschineninduktivität im wesentlichen sinusförmige Dreiphasen-Ströme ergeben, deren Amplitude, Frequenz und Phase frei vorwählbar ist. Die Zuführung zum drehbaren Ständer 8' erfolgt über Drehkontakte, hier Schleifer/Schleifring-Kontakte.

Der Wechselrichter 17 ist ein Spannungszwischenkreis-Wechseirichter und umfaßt drei Baugruppen: einen Gleichspannungsumsetzer 18 (Eingangsbaugruppe), welcher Gleichspannung von einem niedrigen Niveau (hier 12 V) auf ein höheres Zwischenkreisniveau (hier 60 V oder 350 V) und in umgekehrter Richtung umsetzt, einen elektrischen Zwischenkreisspeicher 19, hier ein Kondensator bzw. eine Anordnung parallel geschalteter Kondensatoren, und einen Maschinenwechselrichter 20 (Ausgangsbaugruppe), welcher aus der ZwischenkreisGleichspannung die (getaktete) Dreiphasen-Wechselspannung variabler Amplitude, Frequenz und Phase erzeugen kann oder - bei generatorischem Betrieb der elektrischen Maschine 4 - derartige beliebige Wechselspannungen in die Zwischenkreis-Gleichspannung umsetzen kann. Bei anderen (nicht gezeigten) Ausführungsformen liegt das Zwischenkreisniveau am oberen Rand des ohne besonderen Berührungsschutz zulässigen Niederspannungsbereichs, hier 60 V.

Die drei Baugruppen 18, 19, 20 des Wechselrichters 17 sind in einem metallischen Gehäuse 21 hermetisch eingeschlossen, welches mit einem geeigneten Siedekühlmittel gefüllt ist. Bei diesem handelt es sich z.B. um einen Fluorkohlenwasserstoff, der bei einem geeigneten Druck (etwa zwischen 50 mbar und 3 bar) einen geeigneten Siedepunkt, z.B. bei 60° C, hat. Verdampftes Siedekühlmittel kann in einem Kondensationskühler 22 kondensieren und in flüssiger Form in einem geschlossenen Kreislauf in das Gehäuse 21 zurückkehren. Das Gehäuse 21 mit dem Kühlkreislauf ist hermetisch dicht.

Der Gleichspannungsumsetzer 18 ist niederspannungsseitig mit der Fahrzeugbatterie 11 und verschiedenen Niederspannungverbrauchern 23, wie beispielsweise Beleuchtung und elektronische Geräte, verbunden. Der Wechseirichter 17 kann einerseits Strom auf niedrigem Spannungsniveau zum Laden der Fahrzeugbatterie 11 und Versorgen der Niederspannungsverbraucher 23 liefern, andererseits kann er der Fahrzeugbatterie 11 Strom auf niedrigem Spannungsniveau zum Starten des Verbrennungsmotors 1 entnehmen. Bei anderen (nicht gezeigten) Ausführungsformen befindet sich die Fahrzeugbatterie auf Zwischenkreisniveau und ist direkt mit dem Zwischenkreis gekoppelt.

Der Zwischenkreisspeicher 19 ist verbunden mit einem externen Zusatzspeicher 24, bei dem es sich um einen elektrisehen Speicher, hier eine Zusatzkapazität 25, und/oder einen Schwungradspeicher 26 handeln kann. Der Zusatzspeieher 24 hat in erster Linie die Aufgabe, die beim Dreh-ungleichförmigkeits-Verringern in einer Bremsphase gewonnene Energie zwischenzuspeichern und für die anschließende Antreibphase wieder abzugeben. Daneben dient er auch der Speicherung derjenigen Energie, die beim Anfahren (d.h. Schlupfenergie), beim abbremsenden Synchronisieren sowie bei anderen, durch die elektrische Maschine 4 vermittelten Bremsvorgängen anfällt. Diese Energie kann z.B. für entsprechende Funktionen mit Energiebedarf wiederverwendet werden. Schließlich kann er die Fahrzeugbatterie 11 beim Startvorgang des Verbrennungsmotors 1 entlasten, indem dieser Energie nur langsam entnommen und im Zusatzspeicher 24 gespeichert wird. Hier steht sie dann für eine schnelle Entnahme beim Startvorgang zur Verfügung.

Hingegen hat der (innere) Zwischenkreisspeicher 19 im wesentlichen die Aufgabe, der Maschinen-Wechselrichtergruppe 20 Spannung mit der für das Takten notwendigen hohen Flankensteilheit - also schnell - zu liefern. Er braucht dazu keine sehr hohe Kapazität (er hat z.B. 2 µF), vorteihaft für die Schnelligkeit sind vielmehr geringe Zuleitungsinduktivitäten, was durch die Anordnung im Inneren des Wechselrichters 17 sichergestellt ist (und zwar vorzugsweise auf derselben Platine, auf der auch die elektronischen Schalter des Maschinen-Wechselrichters 20 angeordnet sind). Der Zusatzspeicher 24 kann hingegen relativ langsam arbeiten, so daß hier die Zuleitungskapazitäten aufgrund der externen Anordnung nicht stören. Die Zusatzkapazität 25 kann insbesondere 50 bis 10000 mal größer sein (sie ist hier z.B. 4,7 mF für die Speicherung der Drehungleichförmigkeits-Energie) als die des Zwischenkreisspeichers 19.

Noch größere Speicherkapazitäten sind mit dem Schwungradspeicher 26 erreichbar, der hier eine eigene wechselrichtergesteuerte elektrische Maschine 27 und eine damit gekoppelte Schwungmasse 28 umfaßt. Letztere kann durch ein gesondertes Schwungrad gebildet oder in den Läufer der elektrischen Maschine 27 integriert sein. Das Massenträgheits moment der Schwungmasse 28 beträgt vorzugsweise 0,05 bis 2 kgm². Es ist auch möglich, in dem Schwungradspeicher 26 ein Mehrfaches der zum Starten des Verbrennungsmotors 1 benötigten Energie zu speichern und ihm zum Starten schnell (d.h. in weniger als einer Sekunde) die jeweils nötige Startenergie zu entnehmen.

Bei anderen (nicht gezeigten) Ausführungsformen ist kein gesonderter Zusatzspeicher 24 vorgesehen. Hier ist der Zwischenkreisspeicher 19 so dimensioniert und ggf. außerhalb des Wechselrichters 17 angeordnet, daß er die Funktionen des Zusatzspeichers 24 mit übernehmen kann.

Beim Anfahren mit großem Kupplungsschlupf ist die vom Verbrennungsmotor 1 abgegebene Leistung i.a. wesentlich größer als die von den Antriebsrädern 3 abgeführte. Für den Fall, daß die Speicherkapazität und/oder -leistung nicht ausreicht, um die Differenzenergie bzw. -leistung aufzunehmen, ist ein elektrischer Widerstand 124 zum Verheizen eines Teils oder der ganzen Differenzleistung vorgesehen. Er ist elektrisch über eine (nicht gezeigte) Steuereinrichtung mit dem Zwischenkreis verbunden. Thermisch ist er mit dem Kühlkreislauf des Verbrennungsmotor 1 gekoppelt.

Der Zwischenkreis mit seinem hohen Spannungsniveau (hier 350 V) versorgt verschiedene Hochleistungsverbraucher, wie eine Klimamaschine 29 und Servoantriebe 30 mit elektrischer Energie. Während derartige Hochleistungsverbraucher herkömmlicherweise durch mechanische Kopplung vom Verbrennungsmotor 1 angetrieben werden, erlaubt das hier zur Verfügung stehende hohe Spannungsniveau einen wirkungsgradmäßig günstigeren, rein elektrischen Antrieb.

Eine Steuereinrichtung 31 bestimmt, welcher Ständer 8, 8' angesteuert wird und gibt dem Wechselrichter 17 durch entsprechende Ansteuerung seiner Halbleiterschalter zu jedem Zeitpunkt vor, welche Amplitude, Frequenz und Phase die von ihm zu erzeugende Wechselspannung haben soll. Die Steuereinrichtung 31, die beispielsweise durch ein entsprechend programmiertes Mikrocomputer-System gebildet sein kann, bestimmt zunächst den Betrag und die Richtung des Drehmoments, welches die elektrische Maschine 4 zu einem bestimmten Zeitpunkt erzeugen soll. Sie kann dies z.B. mit Hilfe gespeicherter Kennfeldwerte tun, die für die verschiedensten Betriebszustände für Kupplungsvorgänge das Soll-Drehmoment (oder den Soll-Kupplungsschlupf) sowie für Getriebesynchronisierungs-Vorgänge die Soll-Drehzahl, jeweils als Funktionen der Zeit, repräsentieren. Gegebenenfalls kann die Drehmomentbestimmung ergänzt sein durch eine laufende Messung dieser Größen und eine rückgekoppelte Regelung, welche die Einhaltung der Vorgaben sicherstellt. Zur Drehungleichförmigkeits-Verringerung kann die Steuereinrichtung 31 Betrag und Richtung des zu erzeugenden Drehmoments mit Hilfe einer Kennfeldsteuerung ermitteln, indem sie als Eingangsinformation vom Drehtransformator 16 die Winkelstellung der Triebwelle 10, die momentane mittlere Drehzahl und ggf. weitere Betriebsparameter, wie z.B. die Drosselklappenstellung, erhält und aus einem gespeicherten Kennfeld die momentan zu erwartende Drehungleichförmigkeit in Abhängigkeit von diesen Betriebsparametern ermittelt. Eine andere Möglichkeit besteht darin, die tatsächlich momentan vorliegende Drehungleichförmigkeit zu ermitteln, z.B. durch Berechnung der momentanen Drehgeschwindigkeit auf der Grundlage der vom Drehtransformator 16 gelieferten Information und/oder durch Auswertung der momentan im Verbrennungsmotor 1 vorliegenden Gasdrücke, welche mit Hilfe von Gasdrucksensoren 32 detektierbar sind, sowie durch Erfassung der momentanen Drehmoments des Verbrennungsmotors 1 mit Hilfe einer (nicht gezeigten) Drehmomentnabe im Antriebsstrang. Möglich ist auch eine Kombination von Regelung und Steuerung. Aus dem so ermittelten Wert für die momentane Drehungleichförmigkeit wird ein entsprechender (gegenphasiger) Wert für das schnell variierende Soll-Drehmoment der elektrischen Maschine 4 abgeleitet, dem ggf. ein positives oder negatives Gleich-Drehmoment gewünschter Stärke additiv überlagert wird. Zum Starten des Verbrennungsmotors 1 kann das Soll-Drehmoment auf der Grundlage gespeicherter Werte bestimmt werden, die den zeitlichen Soll-Verlauf der Drehzahl oder des Drehmoments der elektrischen Maschine 4 während des Startvorgangs vorgeben, ggf. ergänzt durch eine Messung dieser Größen und eine rückgekoppelte Regelung, welche die Einhaltung der Vorgaben sicherstellt.

In einem zweiten Schritt bestimmt die Steuereinrichtung 31, welche Amplitude, Frequenz und Phase der Spannung bzw. des Stroms vom Wechseirichter 17 bereitgestellt werden muß, damit die elektrische Maschine 4 dieses Soll-Gesamtdrehmoment herbeiführt. Diese Bestimmung erfolgt bei der elektrischen Asynchronmaschine auf der Grundlage einer feldorientierten Regelung, welche auf einer Modellrechnung der elektrischen Maschine 4 beruht und als Eingangsinformation im wesentlichen die meßbaren elektrischen Ständergrößen (Amplitude, Frequenz und Phase von Strom und Spannung) und die momentane mittlere Läuferdrehzahl verwendet.

In Fig. 7 ist die Steuereinrichtung 31 als außerhalb des Wechselrichtergehäuses 21 angeordnet dargestellt. Um die Zuleitungsinduktivitäten gering zu halten und auch an der Siedebadkühlung zu partizipizieren, ist sie jedoch bei anderen (nicht gezeigten) Ausführungsformen im Inneren des Wechselrichtergehäuses 21 angeordnet.

Die Steuereinrichtung 31 teilt verschiedene, zur Erfüllung ihrer Steueraufgaben dienende Sensoren bzw. davon abgeleitete Sensorinformationen mit einem Motorsteuergerät 33 zur Steuerung des Verbrennungsmotors 1. Im einzelnen handelt es sich z.B. um den Drehtransformator 16 (Winkellagegeber), die Gasdrucksensoren 32, daneben (nicht gezeigte) Sensoren zur Erfassung der mittleren Drehzahl, des Lastzustandes des Verbrennungsmotors 1 (z.B. über die Drosselklappenstellung) und dessen Drehmoments (z.B. mit Hilfe einer Drehmomentnabe), sowie die Drehzahl des Achsantriebs 7 und der eingelegten Gangstufe.

Außerdem kommuniziert die Steuereinrichtung 31 mit einer Vielzahl weiterer Steuergeräte: ein (nicht gezeigtes) Energieverbrauchs-Steuergerät gibt an, wieviel Energie zum Laden der Fahrzeugbatterie 11, zur Versorgung der Niederspannungsverbraucher 23 und der Hochleistungsverbraucher 29, 30 benötigt wird, so daß die Steuereinrichtung 31 eine entsprechende globale Drehmomentverstellung ΔMe (siehe Fig. 6c) veranlassen kann. Das Motorsteuergerät 33 gibt der Steuereinrichtung 31 vor, ob die elektrische Maschine 4 zusätzlich zu ihrer Kupplungs- und Synchronisierungsfunktion sowie der Schwingungsverringerungs-Funktion fahrzeugbeschleunigend oder -bremsend wirken soll, so daß diese eine entsprechende globale Drehmomentverschiebung ΔMe veranlassen kann und ggf. die Drehungleichförmigkeits-Verringerungsfunktion vorübergehend abschalten kann. Entsprechend gibt ein ASR-Steuergerät 34 der Steuereinrichtung 31 bei Vorliegen von Antriebsschlupf vor, daß die elektrische Maschine 4 vorübergehend den Kupplungsschlupf vergrößern soll oder als generatorische Bremse wirken soll, ggf. bevor das ASR-Steuergerät bei verbleibendem Antriebsschlupf als massivere Maßnahme ein Einbremsen der betroffenen Antriebsräder durch die Radbremse veranlaßt. Zusätzlich kann das ASR-Steuergerät seine Schlupfinformation an das Motorsteuergerät 33 übergeben, um außerdem eine Verringerung des Verbrennungsmotor-Drehmoments zu veranlassen. Das Motorsteuergerät 33 führt auch eine automatische Start-Stop-Steuerung durch und gibt der Steuereinrichtung 31 vor, ob die elektrische Maschine 4 den Verbrennungsmotor 1 starten soll.

Bei jeder Art von Bremsen gewonnene Energie wird - soweit möglich - im Zusatzspeicher 24 gespeichert, um zum späteren Antreiben der elektrischen Maschine 4 wiederverwendet oder der Fahrzeugbatterie 11 zugeleitet zu werden. Überschußenergie wird im Widerstand 124 verheizt.

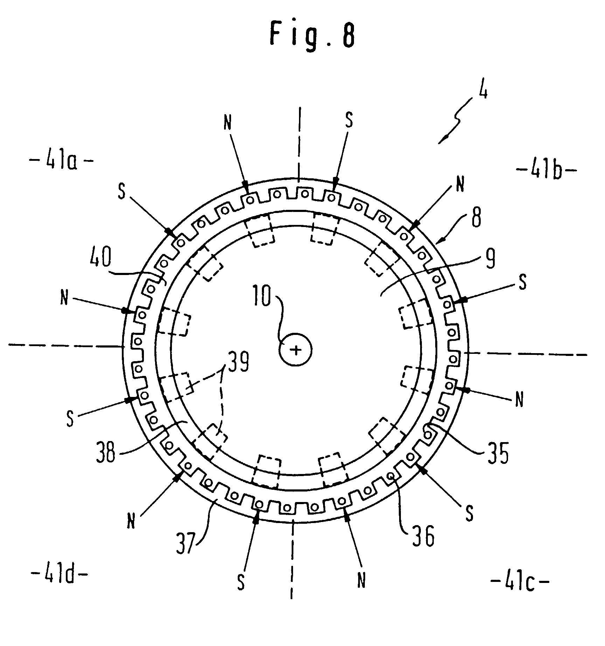

Die in Fig. 8 näher dargestellte elektrische Maschine 4 hat einen Außendurchmesser von ungefähr 250 mm und eine Länge in Axialrichtung von 55 mm und erbringt bei einem Gewicht von 10-15 kg ein Dauerdrehmoment von ca. 50 Nm und ein Spitzendrehmoment von ca. 150 Nm. Sie kann Drehzahlen erreichen, die den Spitzendrehzahlen üblicher Verbrennungsmotoren (ca. 6000 bis 10000 U/min) entspricht und ist drehzahlfest bis 14000 U/min. Die elektrische Maschine 4 hat einen außenliegenden Ständer 8 (zur Vereinfachung ist hier nur ein Ständer dargestellt, für den anderen gilt entsprechendes), welcher Nuten 35 in Richtung der Triebwelle 10 (Axialrichtung) aufweist. Der Ständer 8 trägt eine Drei-Phasen-Wicklung 36, die so ausgebildet ist, daß sie bei Beaufschlagung mit Drei-Phasen-Strom zwölf Pole ausbildet. Pro Pol sind drei Nuten 35, insgesamt also sechsunddreißig Nuten 35 vorhanden. (Bei anderen (nicht gezeigten) Ausführungsformen sind zwecks Verringerung von Streueffekten pro Pol wenigstens 6, vorzugsweise neun Nuten vorhanden.) Die Pole laufen mit der Drehstrom-Qszillation in einer Kreisbewegung im Ständer 8 um. Für einen bestimmten Zeitpunkt ist ihre momentane Lage durch Pfeile, welche die Bezugszeichen "S" (für Südpol) und "N" (für Nordpol) tragen, veranschaulicht. Ein die Nuten 35 nach außen abschließender Rücken 37 ist in Radialrichtung relativ dünn, seine Dicke beträgt (an der Stelle einer Nut 35) vorzugsweise 3-25 mm. Der Ständer 8 ist aus dünnen Statorblechen (die Dicke beträgt hier 0,25 mm) aus einen Material mit niedrigen Ummagnetisierungsverlusten (hier kleiner als 1 W/kg bei 50 Hz und einem Tesla) aufgebaut, mit senkrecht zur Axialrichtung verlaufenden Blechebenen.

Der innenliegende Läufer 9 ist bei der Asynchron-Maschine als Käfigläufer mit im wesentlichen in Axialrichtung verlaufenden Käfigstäben, die jeweils stirnseitig mit einem Kurzschlußring 38 verbunden sind, ausgebildet. Beim der Synchronmaschine trägt der Läufer 9 eine entsprechende Zahl von Polen wie der Ständer 8 (hier zwölf Pole), die durch Permanentmagnete oder entsprechend erregte Spulen gebildet sein können. In Fig. 8 ist die Synchronmaschine ebenfalls veranschaulicht, indem die bei ihr vorhandenen Läuferpole (Bezugsziffer 39) schematisch angedeutet sind.

Der Luftspalt 40 zwischen Läufer 9 und Ständer 8 ist relativ groß; seine Weite beträgt 0,25 bis 2,5 mm, vorzugsweise 0,5 bis 1,5 mm.

Bei anderen (nicht gezeigten) Ausführungsformen ist der Läufer außenliegend und der Ständer innenliegend.

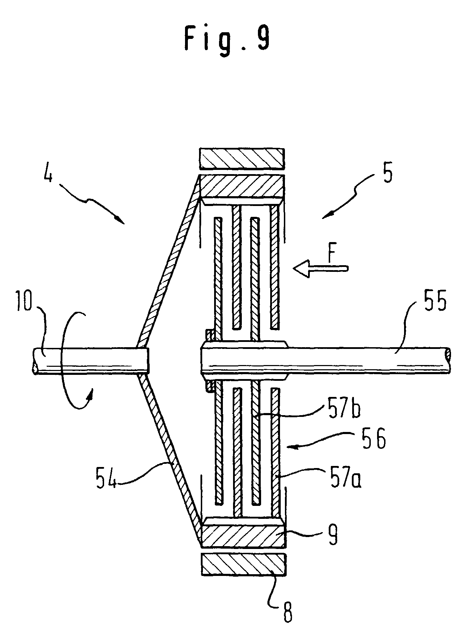

Bei der Ausführungsform gemäß Fig. 9 ist in einer elektrischen Maschine 4 mit nur einem (festliegenden) Ständer 8 eine reibschlüssige Kupplung 5, die als Anfahr- und Schaltkupplung dient, integriert. Bei dieser Ausführungsform hat die elektrische Maschine 4 eine Synchronisierfunktion, jedoch keine elektromagnetische Kupplungsfunktion und liegt daher nicht im Rahmen Erfindung. Innerhalb des z.B. am Motor- oder Getriebegehäuse drehfest gelagerten Ständers 8 ist der Läufer 9 an seiner Peripherie einseitig über einen axial seitlich ausragenden Käfig 54 mit der Triebwelle 10 des Verbrennungsmotors 1 drehfest verbunden. Der Läufer 9 ist innen hohl und hat im wesentlichen die Form eines flachen Kreiszylinder-Mantels. In dem Hohlraum ist die Kupplung 5 - hier eine Lamellenkupplung (Vielflächen-Reibscheibenkupplung) - angeordnet. Sie kann einen Kraftschluß zwischen der Triebwelle 10 mit dem Läufer 9 und in den Hohlraum ragenden Abtriebswelle 55 zum Getriebe 6 herstellen. Hierzu ist der Läufer 9 innenverzahnt und die Abtriebswelle 55 im Bereich des Hohlraums außenverzahnt. In dem Raum dazwischen ist ein Scheibenpaket 56 angeordnet, dessen Scheiben 57 abwechselnd außen- und innenverzahnt sind, so daß abwechselnd jeweils eine Scheibe mit dem Läufer 9 (Außenlamelle 57a) und die nächste Scheibe mit der Abtriebswelle 55 (Innenlamelle 57b) formschlüssig verbunden ist. Ohne axialen Druck können die Außen- und Innenlamellen 57a, 57b praktisch frei gegeneinander rotieren, die Wellen 10, 55 sind dann entkuppelt. Preßt man die Außen- und Innenlamellen 57a, 57b mit Hilfe einer (nicht dargestellten) steuerbar betätigbaren Druckvorrichtung (z.B. eines Winkelhebels) in Axialrichtung zusammen, stellen die entstehenden Reibkräfte den Kraftschluß zwischen den Wellen 10, 55 her, so daß sich das vom Verbrennungsmotor 1 und der elektrischen Maschine 4 erzeugte Drehmoment auf die Abtriebswelle 55 überträgt. Der Kraftschlußteil (d.h. hier das Scheibenpaket 56) der Kupplung 5 findet vollständig im Läufer 9 Platz, ragt also nicht etwa in Axialrichtung seitlich aus ihm heraus. Die Kupplung 5 ist als Naßkupplung ausgeführt. Das Kupplungsöl dient gleichzeitig der Kühlung der elektrischen Maschine 4. Bei anderen (nicht gezeigten) Ausführungsformen sind andere schaltbare kraftschlüssige Kupplungen integriert, z.B. eine Einscheiben-Kupplung in Trocken- oder Naßbauweise.

In entsprechender Weise ist bei anderen (nicht gezeigten, im Rahmen der Erfindung liegenden) Ausführungsformen mit elektromagnetischer Kupplungsfunktion eine mechanische Überbrückungskupplung in die elektrische Maschine integriert. Ein Unterschied zu Fig. 9 besteht dann beispielsweise nur darin, daß die Abtriebswelle 55 mit dem (dann drehbaren) Ständer 8 drehfest verbunden ist.

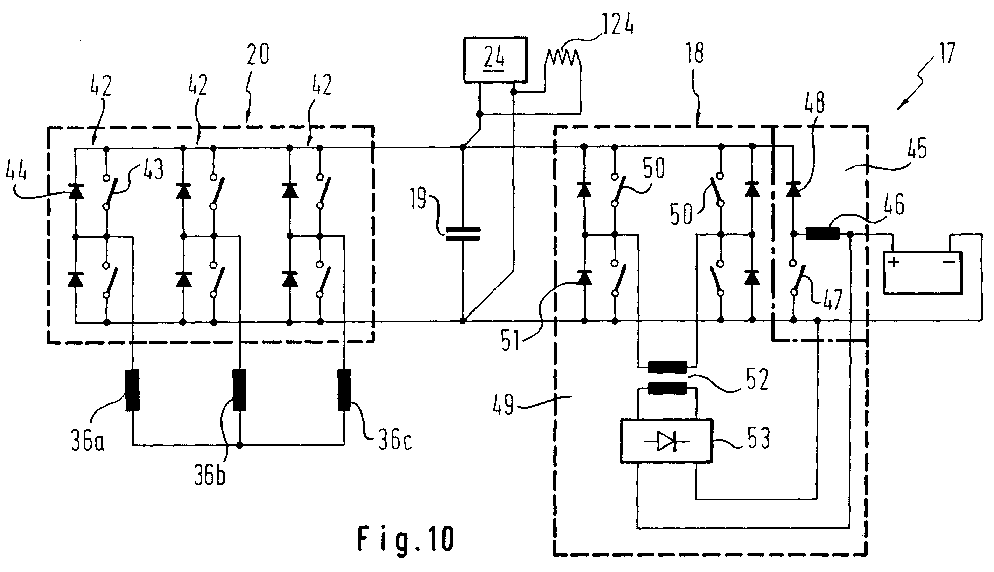

Fig. 10 zeigt einen schematischen Schaltplan des Wechselrichters 17. Man erkennt den Zwischenkreisspeicher 19 in Form einer Kapazität, welcher der (hier nicht näher dargestellte) Zusatzspeicher 24 sowie der Widerstand 124 parallelgeschaltet ist. Die Kapazität und der Widerstand symbolisieren ggf. Parallelschaltungen mehrerer Kondensatoren bzw. Widerstände.

Der Maschinenwechselrichter 20 wird durch drei parallelgeschaltete (aber unabhängig schaltbare) Schaltergruppen 42 gebildet, wobei jede der Schaltergruppen 42 für die Erzeugung jeweils einer der drei Drei-Phasen-Spannungen zuständig ist. Jede der Schaltergruppen 42 ist eine Serienschaltung zweier (unabhängig schaltbarer) Schalter 43 zwischen dem Plus- und den Minuspol des Zwischenkreises. Die Serienschaltung ist mittig (d.h. zwischen den Schaltern 43) mit einer Seite jeweils einer der drei Wicklungen 36a, 36b, 36c der Drei-Phasenwicklung 36 verbunden; an der anderen Seite sind die drei Wicklungen 36a, 36b, 36c miteinander verbunden.

Parallel zu den Schaltern 43 ist jeweils eine Freilaufdiode 44 geschaltet. Sie ist so gepolt, daß sie normalerweise sperrt und, nur wenn der gegenüberliegende Schalter geöffnet wird, einen aufgrund von Selbstinduktion erzeugten, kurzzeitigen Stromfluß in Gegenrichtung durchläßt.

Jeder Schalter 43 symbolisiert eine Parallelschaltung von mehreren (z.B. fünf) MOS-Feldeffektransistoren, welche von der Steuereinrichtung 31 zur Bildung eines Drei-Phasen-Stroms gewünschter Amplitude, Frequenz und Phase direkt angesteuert werden.

Der Gleichspannungsumsetzer 18 umfaßt zwei Unter-Baugruppen, nämlich eine, welche elektrische Energie von dem niedrigen Spannungsniveau (12 V) auf das hohe Zwischenkreis-Spannungsniveau (60 V bzw. 350 V) bringen kann, und eine andere, welche - umgekehrt - elektrische Energie von dem hohen Spannungsniveau (60 V bzw. 350 V) auf das niedrige Spannungsniveau (12 V) bringen kann. Bei Ausführungsformen mit im Zwischenkreis angeordneter Fahrzeugbatterie kann die erstgenannte Unter-Baugruppe entfallen.

Bei der ersten Unter-Baugruppe handelt es z.B. sich um einen Hochsetzsteller 45. Dieser wird durch eine Serienschaltung einer mit dem Pluspol der Fahrzeugbatterie 11 verbundenen Induktivität 46 und einen mit deren Minuspol und dem Minuspol des Zwischenkreises verbundenen Schalter 47 gebildet, wobei diese Serienschaltung mittig über eine (in Durchlaßrichtung gepolte) Hochsetzdiode 48 mit dem Pluspol des Zwischenkreises verbunden ist. Bei geschlossenem Schalter 47 fließt ein Kreisstrom vom Plus- zum Minus pol der Fahrzeugbatterie 11. Nach Öffnen des Schalters 47 sucht eine Selbstinduktionsspannung ein Zusammenbrechen dieses Stromes zu verhindern, mit der Folge, daß kurzzeitig das hohe Zwischenkreis-Spannungsniveau (60 V bzw. 350 V) überschritten wird und Strom durch die (ansonsten sperrende) Hochsetzdiode 48 fließt und den Zwischenkreisspeicher 19 auflädt. Durch periodisches Öffnen und Schließen des Schalters 47 erzielt man einen quasi-stationären Ladestrom, z.B. als Vorbereitung des Startvorgangs. Bei dem Schalter 47 handelt es sich um einen Halbleiterschalter, welcher direkt von der Steuereinrichtung 31 angesteuert wird.

Die zweite Unter-Baugruppe ist z.B. ein Spannungsuntersetzer 49, der ähnlich einem Schaltnetzteil funktioniert. Er umfaßt zwei Serienschaltungen von Schaltern 50 zwischen dem Plus- und Minuspol des Zwischenkreises, mit jeweils parallelgeschalteten Freilaufdioden 51. Die Enden einer Primärwicklung eines Hochfrequenz(HF)-Transformators 52 sind jeweils mit den Mitten dieser Serienschaltungen verbunden. Die Sekundärwicklung des HF-Transformators 52 speist eine Gleichrichtungs- und Glättungseinheit 53, welche wiederum die Fahrzeugbatterie 11 und ggf. Niederspannungsverbraucher 23 speist. Die Schalter 50 symbolisieren Halbleiterschalter, welche direkt von der Steuereinrichtung 31 angesteuert werden. Durch periodisches Öffnen und Schließen der Schalter läßt sich ein hochfrequenter Wechselstrom erzeugen, welcher in der Sekundärwicklung des HF-Transformators 52 eine entsprechende Wechselspannung auf niedrigerem Spannungsniveau induziert, welche durch die Einheit 53 gleichgerichtet und geglättet wird. Der genaue Wert der resultierenden Gleichspannung läßt sich mit Hilfe der Schalter 50 durch Variation der Schaltfrequenz genau einstellen.

## Patentansprüche

1. Antriebssystem für ein Kraftfahrzeug, mit:
- einem Verbrennungsmotor (1) als Antriebsaggregat,
- einem Antriebsstrang (2) zur Übertragung von Drehmoment vom Verbrennungsmotor (1) auf Antriebsräder (3), mit einer vom Verbrennungsmotor (1) angetriebenen Antriebswelle (10) und einer Abtriebswelle (55),
- einer Überbrückungskupplung (60) zwischen Antriebswelle (10) und Abtriebswelle (55),
- einer elektrischen Maschine (4) im Antriebsstrang (2), welche wenigstens zwei elektromagnetische Wirkeinheiten - Läufer (9) und Ständer (8) - aufweist,
- wobei der Läufer (9) mit einer der beiden Wellen - der Abtriebswelle (55) oder der Antriebswelle (10) - drehfest verbunden ist, und die Überbrückungskupplung (60) zwischen dem Läufer (9) und den anderen der beiden Wellen (10 bzw. 55) angeordnet ist, und
- wobei der Ständer (8) wahlweise
i) in einem ersten Kopplungszustand ist, in dem er mit der anderen der beiden Wellen (10 bzw. 55) drehtest gekoppelt ist und dadurch mit dieser Welle (10 bzw. 55) dreht, oder
ii) in einem weiteren Kopplungszustand ist, in dem er von der anderen der beiden Wellen (10 bzw. 55) abgekoppelt und gegen Drehung festgelegt ist,
- wobei der Verbrennungsmotor (1) sein Drehmoment im ersten Kopplungszustand und bei geöffneter Überbrückungskupplung (60) über die dann als elektromagnetische Kupplung wirkende elektrische Maschine (4) auf die Antriebsräder (3) bringt,
wobei
der Verbrennungsmotor (1) in dem weiteren Kopplungzustand sein Drehmoment über die dann geschlossene Überbrückungskupplung (60) auf die Antriebsräder (3) bringt, wobei die elektrische Maschine (4) zusätzlich Drehmoment auf die nun verbundene Antriebs- und Abtriebswelle (10, 55) aufbringt.

2. Antriebssystem für ein Kraftfahrzeug, mit:
- einem Verbrennungsmotor (1) als Antriebsaggregat,
- einem Antriebsstrang (2) zur Übertragung von Drehmoment vom Verbrennungsmotor (1) auf Antriebsräder (3), mit einer vom Verbrennungsmotor (1) angetriebenen Antriebswelle (10) und einer Abtriebswelle (55),
- einer Überbrückungskupplung (60) zwischen Antriebswelle (10) und Abtriebswelle (55),
- einer elektrischen Maschine (4) im Antriebsstrang (2), welche wenigstens zwei elektromagnetische Wirkeinheiten - Läufer (9) und Ständer (8) - aufweist,
- wobei der Läufer (9) mit einer der beiden Wellen - der Abtriebswelle (55) oder der Antriebswelle (10) - drehfest verbunden ist, und die Überbrückungskupplung (60) zwischen dem Läufer (9) und der anderen der beiden Wellen (10 bzw. 55) angeordnet ist, und
- wobei der Ständer (8, 8') als Doppeleinheit ausgebildet ist, dessen
i) erste Teileinheit (8') mit der anderen der beiden Wellen (10 bzw. 55) drehfest gekoppelt ist und dadurch mit dieser Welle (10
ii) dessen zweite Teileinheit (8) nicht mit der anderen der beiden Wellen (10 bzw. 55) gekoppelt, sondern gegen Drehung festgelegt ist
- wobei jeweils eine der beiden Teileinheiten (8', 8) elektromagnetisch wirksam und die andere unwirksam ist, und
- wobei der Verbrennungsmotor (1) sein Drehmoment bei wirksamer erster Teileinheit (8') und bei geöffneter Überbrückungskupplung über die dann als elektromagnetische Kupplung wirkende elektrische Maschine (4) auf die Antriebsräder (3) bringt,
wobei
der Verbrennungsmotor (1) bei wirksamer zweiter Teileinheit (8') sein Drehmoment über die dann geschlossene Überbrückungskupplung (60) auf die Antriebsräder (3) bringt, wobei die elektrische Maschine (4) zusätzlich Drehmoment auf die nun verbundene Antriebs- und Abtriebswelle (10, 55) aufbringt.

3. Antriebssystem nach Anspruch 1 oder 2, bei welchem das von der elektrischen Maschine (4) bei geschlossener Überbrückungskupplung im weiteren Kopplungszustand bzw. bei wirksamer zweiter Teileinheit aufgebrachte zusätzliche Drehmoment ein konstantes positives oder negatives oder ein variierendes Drehmoment ist.

4. Antriebssystem nach Anspruch 1 oder Ansprüchen 1 und 3, bei welchem der Übergang vom ersten in den weiteren Kopplungszustand des Ständers (8) durch Öffnen einer Kupplung (63) zwischen dem Ständer (8) und der anderen der beiden Wellen (10 bzw. 55) und Schließen einer Kupplung (64) zwischen Ständer (8) und einem Gehäuse (61) erfolgt.

5. Antriebssystem nach einem der vorhergehenden Ansprüche, bei welchem die elektrische Maschine (4) als Anfahrkupplung und/oder Schaltkupplung wirkt.

6. Antriebssystem nach einem der vorhergehenden Ansprüche, bei welchem die elektrische Maschine (4) als Schwungmassen-Starter mit elektromagnetisch kuppelbarer Schwungmasse dient.

7. Antriebssystem nach einem der vorhergehenden Ansprüche, bei welchem die elektrische Maschine (4) als aktive Getriebesynchronisiereinrichtung wirkt.

8. Antriebssystem nach einem der vorhergehenden Ansprüche, bei welchem die elektrische Maschine (4) eine Dreh- oder Wanderfeldmaschine ist.

9. Antriebssystem nach einem der vorhergehenden Ansprüche, mit wenigstens einem Wechselrichter (17) zum Erzeugen der für die magnetischen Felder der elektrischen Maschine (4) benötigten Spannungen und/oder Ströme variabler Frequenz, Amplitude und/oder Phase.

10. Antriebssystem nach einem der vorhergehenden Ansprüche, bei welchem die elektrische Maschine (4) außerdem die Funktion einer aktiven Verringerung von Drehungleichförmigkeiten hat.

11. Antriebssystem nach Anspruch 10, bei welchem die elektrische Maschine (4) zur Verringerung der Drehungleichförmigkeiten ein schnell variierendes Drehmoment, d.h. ein Wechsel-Drehmoment erzeugt, welches insbesondere alternierend ist.

12. Antriebssystem nach Anspruch 11, bei welchem die elektrische Maschine (4) das Wechseldrehmoment einem positiven oder negativen Drehmoment d.h. einem Gleich-Drehmoment überlagert.

13. Antriebssystem nach Anspruch 11 oder 12, bei welchem die bei Kupplungsschlupf oder bei sonstigem bremsendem Gleich-Drehmoment gewonnene Energie und/oder die beim Verringern einer positiven Drehungleichförmigkeit gewonnene Energie wenigstens teilweise gespeichert und wiederverwendet wird.

14. Antriebssystem nach einem der vorhergehenden Ansprüche, bei welchem die elektrische Maschine (4) die Funktion eines Direkt-Starters und/oder eines Generators zur Stromversorgung hat.

15. Antriebssystem nach einem der vorhergehenden Ansprüche, bei welchem die elektrische Maschine (4) eine hohe Drehmomentdichte - bezogen auf das maximale Drehmoment - von größer als 0,01 Nm/cm³ aufweist.

16. Antriebssystem nach einem der vorhergehenden Ansprüche, bei welchem in die elektrische Maschine (4) eine mechanische Kupplung integriert ist.

17. Antriebssystem nach einem der vorhergehenden Ansprüche, mit einer Antriebsschlupfregelung, bei welchem die elektrische Maschine (4) derart ausgelegt ist, daß mit ihr eine Antriebsschlupfverringerung durch Verkleinerung des Antriebsmoments herbeiführbar ist, und zwar durch Bremswirkung und/oder durch Kupplungsschlupf-Wirkung.

18. Verfahren zum Betreiben eines Antriebssystem für ein Kraftfahrzeug, mit einem Verbrennungsmotor (1) als Antriebsaggregat, einem Antriebsstrang (2) zur Übertragung von Drehmoment vom Verbrennungsmotor (1) auf Antriebsräder (3), der eine vom Verbrennungsmotor (1) angetriebene Antriebswelle (10) und eine Abtriebswelle (55) aufweist, mit folgenden Merkmalen:
- eine Überbrückungskupplung (60) wird zwischen Antriebswelle (10) und Abtriebswelle (55) vorgesehen,
- eine elektrischen Maschine (4) wird im Antriebs strang (2) vorgesehen, welche wenigstens zwei elektromagnetische Wirkeinheiten - Läufer (9) und Ständer (8) - aufweist, wobei der Läufer (9) mit einer der beiden Wellen - der Abtriebswelle (55) oder der Antriebswelle (10) - drehfest verbunden wird, und die Überbrückungskupplung (60) zwischen dem Läufer (9) und der anderen der beiden Wellen (19 bzw. 55) zugeordnet wird,
- der Ständer (8) wird wahlweise
i) in einem ersten Kopplungszustand betrieben, in dem er mit der anderen der beiden Wellen (10 bzw. 55) drehtest gekoppelt wird und dadurch mit dieser Welle (10 bzw. 55) dreht, oder
ii) in einem weiteren Kopplungszustand, in dem er von der anderen der beiden Wellen (10 bzw. 55) abgekoppelt und gegen Drehung festgelegt wird, und
- wobei der Verbrennungsmotor (1) im ersten Kopplungszustand und bei geöffneter Überbrückungskupplung (60) sein Drehmoment über die dann als elektromagnetische Kupplung wirkende elektrische Maschine (4) auf die Antriebsräder (3) bringt,
wobei
der Verbrennungsmotor (1) in dem weiteren Kopplungzustand sein Drehmoment über die dann geschlossene Überbrückungskupplung (60) auf die Antriebsräder (3) bringt, wobei die elektrische Maschine (4) zusätzlich Drehmoment auf die nun verbundene Antriebs- und Abtriebswelle (10, 55) aufbringt.

19. Verfahren zum Betreiben eines Antriebssystem für ein Kraftfahrzeug, mit einem Verbrennungsmotor (1) als Antriebsaggregat, einem Antriebsstrang (2) zur Übertragung von Drehmoment vom Verbrennungsmotor (1) auf Antriebsräder (3), der eine vom Verbrennungsmotor (1) angetriebene Antriebswelle (10) und eine Abtriebswelle (55) aufweist, mit folgenden Merkmalen:
- eine Überbrückungskupplung (60) wird zwischen Antriebswelle (10) und Abtriebswelle (55) vorgesehen,
- eine elektrische Maschine (4) wird im Antriebsstrang (2) vorgesehen, welche wenigstens zwei elektromagnetische Wirkeinheiten - Läufer (9) und Ständer (8) - aufweist, wobei der Läufer (9) mit einer der beiden Wellen - der Abtriebswelle (55) oder der Antriebswelle (10) - drehfest verbunden wird, und die Überbrückungskupplung (60) zwischen dem Läufer (9) und der anderen der beiden Wellen (10 bzw. 55) angeordnet wird,
- der Ständer (8, 8') wird als Doppeleinheit aus gebildet, dessen
i) erste Teileinheit (8') mit der anderen der beiden Wellen (10 bzw. 55) drehfest gekoppelt ist und dadurch mit dieser Welle (10 bzw. 55) dreht, und
ii) dessen zweite Teileinheit (8) nicht mit der anderen der beiden Wellen (10 bzw. 55) gekoppelt, sondern gegen Drehung festgelegt ist,
- wobei jeweils eine der beiden Teileinheiten (8', 8) elektromagnetisch wirksam und die andere unwirksam gemacht wird, und
- wobei der Verbrennungsmotor (1) bei wirksamer erster Teileinheit (8') und bei geöffneter Überbrückungskupplung (60) sein Drehmoment über die dann als elektromagnetische Kupplung wirkende elektrische Maschine (4) auf die Antriebsräder (3) bringt,
wobei
der Verbrennungsmotor bei wirksamer zweiter Teileinheit (8') sein Drehmoment über die dann geschlossene Überbrückungskupplung (60) auf die Antriebsräder (3) bringt, wobei die elektrische Maschine (4) zusätzlich Drehmoment auf die nun verbundene Antriebs- und Abtriebswelle (10, 55) aufbringt.

20. Verfahren nach Anspruch 19 oder 20, bei welchem ein Antriebssystem nach einem der Ansprüche 1-18 verwendet wird.

## Claims

1. A drive system, especially for a motor vehicle, with
- an internal combustion engine (1) as drive assembly,
- a drive train (2) for the transmission of torque from the internal combustion engine (1) to drive wheels (3), with a drive shaft (10) driven by the internal combustion engine (1) and a take-off shaft (55),
- a bridge coupling (60) between drive shaft (10) and take-off shaft (55),
- an electric machine (4) in the drive train (2), which comprises at least two electromagnetic active units - rotor (9) and stator (8),
- wherein the rotor (9) is connected in torsion-free manner to one of the two shafts - the take-off shaft (55) or the drive shaft (10) - and the bridge coupling (6) is disposed between the rotor (9) and the other of the two shafts (10 or 55 respectively), and
- wherein the stator (8) is optionally
i) in a first coupling state, in which it is coupled in torsion-free manner with the other of the two shafts (10 or 55 respectively) and thereby turns with this shaft (10 or 55 respectively), or
ii) is in another coupling state, in which it is uncoupled from the other of the two shafts (10 or 55 respectively) and is fixed against rotation,
- wherein the internal combustion engine (1) applies its torque to the drive wheels (3) in the first coupling state and with the bridge coupling (60) open via the electric machine (4) then acting as an electromagnetic coupling,
wherein in the other coupling state the internal combustion engine (1) applies its torque via the then closed bridge coupling (60) to the drive wheels (60), whereby the electric machine (4) additionally applies torque to the now connected drive and take-off shafts (10, 55).

2. A drive system for a motor vehicle, with:
- an internal combustion engine (1) as drive assembly,
- a drive train (2) for transmitting torque from the internal combustion engine (1) to drive wheels (3), with a drive shaft (10) driven by the internal combustion engine (10) and a take-off shaft (55),
- a bridge coupling (60) between drive shaft (10 and take-off shaft (55),
- an electric machine (4) in the drive train (2), which comprises at least two electromagnetic active units - rotor (9) and stator (8),
- wherein the stator (9) is connected in torsion-free manner with one of the two shafts - the take-off shaft (55) or the drive shaft (10) - and the bridge coupling (60) is disposed between the rotor (9) and the other of the two shafts (10 or 55 respectively), and
- wherein the stator (8, 8') is constructed as double unit, in which
i) the first sub-unit (8') is coupled in torsion-free manner to the other of the two shafts (10 or 55 respectively) and as a result rotates with this shaft (10 or 55 respectively), and
ii) the second sub-unit (8) is not coupled with the other of the two shafts (10 or 55 respectively), but is prevented from rotation,
- wherein one of the two sub-units (8', 8) is electromagnetically active and the other inactive, and
- wherein, with an active first sub-unit (8') and with the bridge coupling opened, the internal combustion engine (1) applies its torque to the drive wheels (3) via the electric machine (4) then working as an electromagnetic coupling,
wherein, with the second sub-unit (8') active, the internal combustion engine (1) brings its torque via the then closed bridge coupling (60) to the drive wheels (3), the electric machine additionally applying torque to the now connected drive and take-off shaft (10, 55).

3. A drive system according to Claim 1 or 2, in which the additional torque applied by the electric machine (4) when the bridge circuit is closed in the further coupling state or when a second sub-unit is active is a constant positive or negative or a varying torque.

4. A drive system according to Claim 1 or Claims 1 and 3, in which the transition from the first into the other coupling state of the stator (8) occurs by opening a coupling (63) between the stator (8) and the other of the two shafts (10 or 55 respectively) and closing a coupling (64) between stator (8) and a housing (61).

5. A drive system according to one of the preceding claims, in which the electric machine (4) acts as a starting clutch and/or shifting clutch.

6. A drive system according to one of the preceding Claims, in which the electric machine (4) serves as a gyrating mass starter that can be electromagnetically coupled.

7. A drive system according to one of the preceding claims, in which the electric machine (4) acts as an active transmission synchronisation device.

8. A drive system according to one of the preceding claims, in which the electric machine (4) is a rotary-field or travelling-wave machine.

9. A drive system according to one of the preceding claims, with at least one inverter (17) for generating the voltages and/or currents of variable frequency, amplitude and/or phase required for the magnetic fields of the electric machine (4).

10. A drive system according to one of the preceding claims, in which the electric machine (4) also has the function of an active reduction of rotational non-uniformities.

11. A drive system according to Claim 10, in which the electric machine (4) generates a rapidly varying torque, i.e. a variable torque, which is alternating in particular, to reduce the rotational non-uniformities.

12. A drive system according to Claim 11, in which the electric machine (4) superimposes the variable torque on a positive or negative torque, i.e. on a constant torque.

13. A drive system according to Claim 11 or 12, in which the energy obtained during coupling slip or in otherwise braking constant torque and/or when reducing a positive rotational non-uniformity is at least partly stored up and reused.

14. A drive system according to one of the preceding claims, in which the electric machine (4) has the function of a direct starter and/or a generator for power supply.

15. A drive system according to one of the preceding claims, in which the electric machine (4) has a high torque density - in relation to the maximum torque - in particular, greater than 0.01 Nm/cm³.

16. A drive system according to one of the preceding claims, in which a mechanical coupling is integrated into the electric machine (4).

17. A drive system according to one of the preceding claims, with a drive slip control, in which the electric machine (4) is designed in such a manner that with it a drive slip reduction can be achieved by reducing the drive torque, especially by braking action and/or by clutch slip action.

18. A method for the operation of a drive system for a motor vehicle, with an internal combustion engine (1) as drive assembly, a drive train (2) for the transmission of torque from the internal combustion engine (1) to drive wheels (3), which comprises a drive shaft (10) driven by the internal combustion engine (1) and a take-off shaft (10), with the following features:
- a bridge coupling (60) is provided between drive shaft (10) and take-off shaft (55),
- an electric machine (4) is provided in the drive train (2), and comprises at least two electromagnetic active units - rotor (9) and stator (8) -, wherein the rotor (9) is connected in torsion-free manner to one of the two shafts - the take-off shaft (55) or the drive shaft (10) - and the bridge coupling (60) is associated between the rotor (9) and the other of the two shafts (19 or 55 respectively),
- the stator (8) is optionally
i) operated in a first coupling state, in which it is coupled in torsion-free manner with the other of the two shafts (10 or 55 respectively) and thereby turns with this shaft (10 or 55 respectively), or
ii) (operated) in another coupling state, in which it is uncoupled from the other of the two shafts (10 or 55 respectively) and is fixed against rotation, and
- wherein in the first coupling state and with the bridge coupling (60) open the internal combustion engine brings its torque to the drive wheels (3) via the electric machine (4) then acting as an electromagnetic coupling,
wherein
in the other coupling state the internal combustion engine (1) brings its torque to the drive wheels (3) via the then closed bridge coupling (60), the electric machine (4) additionally applying torque to the now connected drive and take-off shaft (10, 55).

19. A method for the operation of a drive system for a motor vehicle, with an internal combustion engine (1) as drive assembly, a drive train (2) for the transmission of torque from the internal combustion engine (1) to drive wheels (3), which comprises a drive shaft (10) driven by the internal combustion engine (1) and a take-off shaft (10), with the following features:
- a bridge coupling (60) is provided between drive shaft (10) and take-off shaft (55),
- an electric machine (4) is provided in the drive train (2), which comprises at least two electromagnetic active units - rotor (9) and stator (8) -, wherein the rotor (9) is connected in torsion-free manner to one of the two shafts - the take-off shaft (55) or the drive shaft (10) - and the bridge coupling (60) is disposed between the rotor (9) and the other of the two shafts (10 or 55 respectively), - the stator (9, 8') is constructed as a double unit, in which
i) the first sub-unit (8') is coupled in torsion-free manner with the other of the two shafts (10 or 55 respectively) and as a result turns with this shaft (10 or 55 respectively), and
ii) the second sub-unit (8) is not coupled with the other of the two shafts (10 or 55 respectively), but is prevented from rotation,
- wherein one of the two sub-units (8', 8) is electromagnetically active and the other is made inactive, and
- wherein, with the first sub-unit (8') and the bridge coupling (60) open, the internal combustion engine (1) brings its torque to the drive wheels (3) via the electric machine (4) then acting as an electromagnetic coupling,
wherein, with the second sub-unit (8') active, the internal combustion engine (1) brings its torque to the drive wheels (3) via the then closed bridge coupling (60), the electric machine (4) additionally applying torque to the now connected drive and take-off shafts (10, 55).

20. A method according to Claim 19 or 20, in which a drive system according to one of Claims 1-18 is used.

## Revendications

1. Système d'entraînement pour un véhicule auto-mobile, comprenant :
- un moteur à combustion interne (1) en tant qu'unité d'entraînement,
- une chaîne motrice (2) pour la transmission du couple du moteur à combustion interne (1) à des roues motrices (3), comportant un arbre d'entraînement (10) entraîné par le moteur à combustion interne (1), et un arbre mené (55),
- un embrayage de prise directe (60) disposé entre l'arbre d'entraînement (10) et l'arbre mené (55),
- une machine électrique (4) située dans la chaîne motrice (2) et qui comporte au moins deux unités électromagnétiques - un rotor (9) et un stator (8) -,
- le rotor (9) étant relié solidairement en rotation à l'un des deux arbres - l'arbre mené (55) ou l'arbre d'entraînement (10), et l'embrayage de prise directe (60) étant disposé entre le rotor (9) et l'autre des deux arbres (10 ou 55), et
- dans lequel le stator (8) est au choix
i) dans un premier état d'accouplement, dans lequel il est couplé solidairement en rotation à l'autre des deux arbres (10 ou 55) et de ce fait tourne avec cet arbre (10 ou 55), ou
ii) dans un autre état d'accouplement, dans lequel il est découplé de l'autre des deux arbres (10 ou 55) et est bloqué contre toute rotation,
- dans lequel le moteur à combustion interne (1) applique son couple aux roues motrices (3), lorsqu'il se trouve dans son premier état d'accouplement et lorsque l'embrayage de prise directe (60) est ouvert, par l'intermédiaire de la machine électrique qui agit alors en tant qu'embrayage électromagnétique, et
dans lequel, dans son autre état d'accouplement, le moteur à combustion interne (1) transmet son couple par l'intermédiaire de l'embrayage de prise directe (60), qui est alors fermé, aux roues motrices (3), la machine électrique (4) appliquant en outre un couple à l'arbre d'entraînement et à l'arbre mené (10,55), qui sont alors reliés entre eux.

2. Système d'entraînement pour un véhicule automobile comportant :
- un moteur à combustion interne (1) en tant qu'unité d'entraînement,
- une chaîne motrice (2) pour la transmission du couple du moteur à combustion interne (1) à des roues motrices (3), comportant un arbre d'entraînement (10) entraîné par le moteur à combustion interne (1), et un arbre mené (55),
- un embrayage de prise directe (60) disposé entre l'arbre d'entraînement (10) et l'arbre mené (55),
- une machine électrique (4) située dans la chaîne motrice (2) et qui comporte au moins ceux unités électromagnétiques - un roter (9) et un stator (8) -,
- le roter (9) étant relié solidairement en rotation à l'un des deux arbres - l'arbre mené (55) ou l'arbre d'entraînement (10), et l'embrayage de prise directe (60) étant disposé entre le roter (9) et l'autre des deux arbres (10 ou 55), et
- dans lequel le stator (8,3') est agencé sous la forme d'une unité double, dont
i) la première unité partielle (8') est accouplée solidairement en rotation à l'autre des deux arbres (10 ou 55) et tourne de ce fait avec cet arbre (10 ou 55), et
ii) dont la seconde unité partielle (8) n'est pas accouplée à l'autre des deux arbres (10 ou 55), et au contraire est bloquée contre toute rotation,
- dans lequel respectivement l'une des deux unités partielles (8',8) est active du point de vue électromagnétique et l'autre est non active, et
- dans lequel le moteur à combustion interne applique son couple aux roues motrices (3), lorsque la première unité partielle (8') est active et que l'embrayage de prise directe (60) est ouvert, et ce par l'intermédiaire de la machine électrique (4) qui agit alors en tant qu'embrayage électromagnétique, et
dans lequel, lorsque la seconde unité partielle (8') est active, le moteur à combustion interne (1) applique son couple aux roues motrices (3) par l'intermédiaire de l'embrayage de prise directe (60), qui est alors fermé, la machine électrique (4) appliquant en outre un couple à l'arbre d'entraînement et à l'arbre mené (10,55), qui sont alors reliés entre eux.

3. Système d'entraînement selon la revendication 1 ou 2, dans lequel lorsque l'embrayage de prise directe est fermé, le couple supplémentaire appliqué par la machine électrique (4) dans l'autre état d'accouplement ou lorsque la seconde unité partielle est active, est un couple positif ou négatif constant ou un coude variable.

4. Système d'entraînement selon la revendication 1 ou les revendications 1 et 3, dans lequel le passage du premier état d'accouplement au second état d'accouplement du stator (8) s'effectue au moyen de l'ouverture d'un embrayage (63) entre le stator (8) et l'autre des deux arbres (10 ou 55) et de la fermeture d'un embrayage (64) entre le stator (8) et un boîtier (61).

5. Système d'entraînement selon l'une des revendications précédentes, dans lequel la machine électrique (4) agit en tant qu'embrayage de démarrage et/ou embrayage de changement de vitesse.

6. Système d'entraînement selon l'une des revendications précédentes, dans lequel la machine électrique (4) est utilisée comme démarreur à masse d'inertie, comprenant une masse d' inertie pouvant être accouplée par voie électromagnétique.

7. Système d'entraînement selon l'une des revendications précédentes, dans lequel la machine électrique (4) est agencée sous la forme d'un dispositif actif de synchronisation de boîte de vitesses.

8. Système d'entraînement selon l'une revendications précédentes, dans lequel la machine électrique (4) est une machine à champ tournant ou une machine à champ d'ondes progressives.

9. Système d'entraînement selon l'une revendications précédentes, comportant au moins un onduleur (17) servant à produire les tensions et/ou courants ayant une fréquence, une amplitude et/ou une phase variable et qui sont nécessaires pour les champs magnétiques de la machine électrique (4).

10. Système d'entraînement selon l'une revendications précédentes, dans lequel la machine électrique (4) assume en outre une fonction de réduction active d'irrégularités de la vitesse de rotation.

11. Système d'entraînement selon la revendication 10, dans lequel la machine électrique (4) servant à réduire les irrégularités de rotation possède un coude à variation rapide, c'est-à-dire un couple ondulant, qui notamment est alternatif.

12. Système d'entraînement selon la revendication 11, dans lequel la machine électrique (4) superpose le couple ondulant à un couple positif ou négatif, c'est-à-dire à un couple constant.

13. Système d'entraînement selon la revendication 11 ou 12, dans lequel les énergies obtenues lors du glissement de l'embrayage ou bien dans le cas d'un autre couple constant ce freinage, et/ou l'énergie obtenue lors de la reduction d'une irrégularité positive de rotation, est au moins partiellement accumulée et réutilisée.

14. Système d'entraînement selon l'une revendications précédentes, dans lequel la machine électrique (4) assume la fonction d'un démarreur direct et/ou d'un générateur pour l'alimentation en courant.

15. Système d'entraînement selon l'une revendications précédentes, dans lequel la machine électrique (4) possède une densité de couple élevée - rapportée au couple maximum - de plus de 0,01 Nm/cm³.

16. Système d'entraînement selon l'une revendications précédentes, dans lequel un embrayage mécanique est intégré dans la machine électrique (4).

17. Système d'entraînement selon l'une revendications précédentes, comportant une unité de régulation du glissement d'entraînement, et dans lequel la machine électrique (4) est constituée de telle sorte qu'avec cette machine on peut réduire le glissement d'entraînement par réduction du couple d'entraînement, et ce par une action de freinage et/ou une action de glissement d'embrayage.

18. Procédé pour faire fonctionner un système d'entraînement pour un véhicule automobile, comportant un moteur a combustion interne (1) en tant qu'unité d'entraînement, une chaîne motrice (2) pour transmettre un couple du moteur à combustion interne (1) aux roues motrices (3) et qui possède un arbre d'entraînement (10), entraîné par le moteur à combustion interne, et un arbre mené (55), présentant les caractéristiques suivantes :
- un embrayage de prise directe (60) est prévu entre l'arbre d'entraînement (10) et l'arbre mené (55),
- une machine électrique (4) est prévue dans la chaîne motrice (2) , cette machine comprenant au moins ceux unités électromagnétiques actives - un rotor (9) et un stator (8) -, le rotor (9) étant relié solidairement en rotation à l'un des deux arbres - i'arbre mené (55) ou l'arbre d'entraînement (10) -, et l'embrayage de prise directe (60) étant disposé entre le rotor (9) et l'autre des deux arbres (10 ou 55),
- le stator (8) est au choix
i) dans un premier état d'accouplement, dans lequel il est couplé solidairement en rotation à l'autre des deux arbres (10 ou 55) et de ce fait tourne avec cet arbre (10 ou 55), ou
ii) dans un autre état d'accouplement, dans lequel il est découplé de l'autre des deux arbres (10 ou 55) et est bloqué contre toute rotation,
- dans lequel le moteur à combustion interne (1) applique son couple aux roues motrices (3), lorsqu'il se trouve dans son premier état d'accouplement et lorsque l'embrayage de prise directe (60) est ouvert, par l'intermédiaire de la machine électrique qui agit alors en tant qu'embrayage électromagnétique, et
dans lequel, dans son autre état d'accouplement, le moteur à combustion interne (1) transmet son couple par l'intermédiaire de l'embrayage de prise directe (60), qui est alors fermé, aux roues motrices (3) , la machine électrique (4) appliquant en outre un couple à l'arbre d'entraînement et à l'arbre mené (10,55), qui sont alors reliés entre eux.

19. Procédé pour faire fonctionner un système d'entraînement pour un véhicule automobile, comprenant un moteur à combustion interne (1) en tant qu'unité d'entraînement, une chaîne motrice (2) pour la transmission d'un couple depuis moteur à combustion interne (1) à des roues motrices (3) et qui comporte un arbre d'entraînement (10) entraîné par le moteur à combustion interne et un arbre mené (55), présentant les caractéristiques suivantes :
- un embrayage de prise directe (60) disposé entre l'arbre d'entraînement (10) et l'arbre mené (55),
- une machine électrique (4) située dans la chaîne motrice (2) et qui comporte au moins deux unités électromagnétiques - un rotor (9) et un stator (8) -,
- le rotor (9) étant relié solidairement en rotation à l'un des deux arbres - l'arbre mené (55) ou l'arbre d'entraînement (10), et l'embrayage de prise directe (60) étant disposé entre le rotor (9) et l'autre des deux arbres (10 ou 55), et
- dans lequel le stator (8,8') est agencé sous la forme d'une unité double, dont
i) la première unité partielle (8') est accouplée solidairement en rotation à l'autre des deux arbres (10 ou 55) et tourne de ce fait avec cet arbre (10 ou 55), et
ii) dont la seconde unité partielle (8) n'est pas accouplée à l'autre des deux arbres (10 ou 55), et au contraire est bloquée contre toute rotation,
- dans lequel respectivement l'une des deux unités partielles (8',8) est active du point de vue électromagnétique et l'autre est non active, et
- dans lequel le moteur à combustion interne applique son couple aux roues motrices (3), lorsque la première unité partielle (8') est active et que l'embrayage de prise directe (60) est ouvert, et ce par l'intermédiaire de la machine électrique (4) qui agit alors en tant qu'embrayage électromagnétique, et
dans lequel, lorsque la seconde unité partielle (8') est active, le moteur à combustion interne (1) applique son couple aux roues motrices (3) par l'intermédiaire de l'embrayage de prise directe (60), qui est alors fermé, la machine électrique (4) appliquant en outre un couple à l'arbre d'entraînement et à l'arbre mené (10,55), qui sont alors reliés entre eux.

20. Procédé selon la revendication 19 ou 19, selon lequel on utilise un système d'entraînement conformément aux revendications 1-18.
